# FASCICULE DE BREVET EUROPEEN

(11) **EP 1 043 787 B1**
(45) Date de publication et mention de la délivrance du brevet: **26.01.2011**
(21) Numéro de dépôt: 00420064.8
(22) Date de dépôt: 04.04.2000
(51) Int. Cl.: H01M 4/02, H01M 4/62, H01M 4/13, H01M 10/05

(54) **Electrode composite comprenant deux électrolytes solides interpénétrées**
Zwei interpenetrierende Festelektrolyten enthaltende Verbundelektrode
Composite electrode comprising two interpenetrating solid electrolytes

(30) Priorité: 07.04.1999 CA 2268316
(43) Date de publication de la demande: 11.10.2000
(73) Titulaire: Bathium Canada Inc., Boucherville, QC J4B 7Z7 (CA)
(72) Inventeur: Besner, Simon, Coteau-du-Lac QC, J0P 1B0 (CA); Armand, Michel, Montréal QC, H3T 1N2 (CA); Magnan, Jean-François, Neuville QC, G0A 2R0 (CA); Belanger, André, Sainte-Julie QC, J3E 1K1 (CA); Gauthier, Michel, La Prairie QC, J5R 1E6 (CA); Dupuis, Elisabeth, McMasterville QC, J3G 1E6 (CA)
(74) Mandataire: Guerre, Dominique

(56) Documents cités:
- EP-A- 1 043 790
- EP-A- 1 043 795
- US-A- 5 449 576
- US-A- 5 705 291
- US-A- 5 856 045

## Description

La présente invention concerne une électrode composite pour cellule électrochimique, une cellule électrochimique comprenant l'électrode composite, un procédé de préparation de l'électrode composite, ainsi qu'un procédé de préparation d'une demi-pile comprenant un sous-réseau composite minéral poreux - séparateur minéral poreux.

Plus particulièrement, l'invention concerne une électrode composite dans laquelle deux électrolytes solides interpénétrés sont utilisés, un premier électrolyte de nature organique, constitué préférentiellement d'un polymère sec ou gélifié rendu conducteur par la dissolution d'un sel ou d'un mélange de sels de préférence contenant l'ion lithium, et qui agit comme liant déformable de la composite, et un second électrolyte de nature minérale préférentiellement vitreux, conducteur spécifique des ions notamment de lithium et dans lequel les composantes du premier électrolyte polymère sont insolubles. L'électrolyte solide minéral est mis en oeuvre sous forme de solution aqueuse ou un mélange d'eau et d'alcools légers, qui est mise en contact avec les matériaux de l'électrode sous forme dispersée afin de mouiller au moins en partie les phases solides de la composite, c'est-à-dire, les grains du matériau actif de l'électrode, l'additif de conduction électronique ainsi que le collecteur de courant de l'électrode sur lequel la dispersion est appliquée de façon à former dans un premier temps un sous ensemble minéral poreux. L'électrolyte organique comprenant préférentiellement un polymère est par la suite introduit par perméation (imprégnation) dans le sous-réseau minéral poreux de façon à constituer l'électrode composite de l'invention.

L'usage de liants inertes dans la mise en forme d'électrodes composite à électrolytes liquides est connu de l'homme de l'art depuis des années. Avec le développement des électrolytes polymères conducteurs intrinsèques ou gélifiés, l'électrolyte est devenu également le liant de l'électrode composite ce qui a permis de s'accommoder plus facilement les variations de volume des matériaux d'électrode (Armand Europe et Bellcore). On a également décrit l'usage de taux appréciables de liants minéraux de type polysilicates dans des composites afin de lier mécaniquement les matériaux d'électrode à leur collecteur de courant dans un système de type lithium-ion à électrolyte liquide et on a démontré la possibilité d'effectuer une vingtaine de cycles (Fauteux U.S. 5,856,045). Un procédé de fabrication d'une électrode composite comportant une étape d'élaboration sous air d'une électrode poreuse sur son collecteur et une étape d'imprégnation des composantes d'un électrolyte polymère de façon à combler la porosité a été décrit dans WO 97/44843, sans mentionner toutefois le mouillage préférentiel des phases en présence.

Le traitement de matériaux d'électrode actifs par des phases minérales pour réduire l'agressivité chimique des poudres actives face aux électrolytes organiques a également été décrit pour des cathodes de systèmes lithium-ion (Tarascon).

Accessoirement, la protection des collecteurs de courant tels que l'aluminium par des revêtements à base de carbone a fait l'objet de nombreux brevets proposant l'usage de liants inertes de type organique (Rexham, Yuasa....) ou de type minéraux (Fauteux U.W. 5,580,686).

Aucune de ces solutions ne répond à tous les critères permettant d'assurer un maintien des performances en puissance et en capacité de cyclage, notamment dans des conditions de température élevée, notamment avec les générateurs au lithium à électrolytes polymères fonctionnants à des températures comprises entre 40 et 80°C, (JPS MG) ou encore avec les générateurs de type lithium-ion fonctionnant à la température ambiante mais à des tensions élevées de près de 4 volts (ref. lithium-ion). En particulier, aucune des solutions proposées n'offre de solution globale au problème du maintien de la qualité des échanges ioniques et électroniques entres toutes les phases constituant l'électrode composite, notamment entre les particules solides dispersées. Dans les cas extrêmes de température et de tension, les collecteurs et les interfaces entre les diverses phases solides, ou entre les particules d'une même phase, sont fortement sollicités et ont tendance à perdre prématurément leurs propriétés par formation de films de passivation qui nuisent à la qualité des contacts électriques à l'intérieur du générateur. Dans ces conditions, les composantes des électrolytes (solvant et sel) jouent un rôle important dans la formation des films de passivation aux interfaces.

Le brevet US 5,449,576 (Anani et al.) propose comme solution un électrolyte multicouche constitué d'un électrolyte primaire et d'un électrolyte secondaire situé entre l'électrolyte primaire et chacune des électrodes de la cellule électrochimique. L'électrolyte secondaire est sélectionné selon sa capacité à résister au potentiel maximum de l'électrode. L'électrolyte secondaire protège ainsi l'électrolyte primaire et empêche les réactions chimiques entre l'électrolyte primaire et la surface des électrodes qui peuvent menées à la formation de couches isolantes ioniques à la surface des électrodes.

Le brevet US 5,705,291 (Amatucci et al.) quant à lui propose une cellule électrochimique comprenant un matériau cathodique dont les particules de LiMn₂O₄ sont enduites d'une couche de Borate ou de Borate lithié afin de limiter les contacts entre les particules LiMn₂O₄ et l'électrolyte liquide de la cellule électrochimique. Par contre, la cellule électrochimique décrite comprend un électrolyte de type liquide pour lesquels les problèmes de passivation et de dégradation tels qu'énoncés précédemment ne sont pas importants.

Une façon avantageuse de maintenir la qualité des contacts électriques dans un générateur consisterait à utiliser des électrolytes solides minéraux vitreux ou cristallins qui sont en plus des conducteurs spécifiques des ions lithium. Ces électrolytes solides sont moins réactifs cinétiquement ou thermodynamiquement que les liquides ou polymères organiques et ne nécessitent pas l'usage d'un sel de lithium mobile susceptible de réagir avec le matériau actif de l'électrode ou avec le collecteur de courant.

D'autre part, à l'état vitreux et élaborés en solution, ces électrolytes ont des propriétés de mouillage qui permettent de préserver au moins une partie des surfaces d'échange des phénomènes de passivation engendrés par un contact direct avec les composantes d'un électrolyte organique. Les inconvénients de ces électrolytes sont cependant d'être peu conducteurs et surtout d'être rigides et cassants, c'est-à-dire peu accommodants des variations de volume se produisant aux électrodes lors des cycles de décharge/charge. Il est donc difficile de les utiliser comme seul électrolyte d'une composite et encore moins de les utiliser comme liant d'une composite soumise à des variations de volume importantes des électrodes au cours du cyclage.

La présente invention a pour objet de palier à ces inconvénients en associant dans une même électrode composite d'un générateur, l'usage d'un électrolyte minéral solide avec un électrolyte organique solide, préférentiellement un électrolyte polymère.

Un autre objet de l'invention, est d'utiliser dans un premier temps un électrolyte solide minéral, préférentiellement vitreux ou partiellement vitreux, en solution aqueuse, pour mouiller et adhérer à au moins une partie de la surface des phases en présence: collecteur de courant, matériau actif de l'électrode et au moins à une partie de l'additif de conduction électronique.

L'invention a donc aussi pour objet la mise au point d'une étape de préparation qui définit des zones de contact étanches entre l'électrolyte vitreux et chacune des phases solides.

L'invention a aussi pour objet de disperser le matériau actif de l'électrode et l'additif de conduction électronique dans une phase aqueuse comprenant l'électrolyte solide vitreux en solution et à l'appliquer sur le collecteur de courant de façon à constituer un sous-réseau minéral poreux.

L'invention a aussi pour objet un procédé qui consiste à imprégner un électrolyte polymère solide organique et un sel de lithium présents sous forme de polymère fondu, de solution de polymère ou encore sous forme de polymère qui sera réticulé après mise en forme, de façon à constituer une électrode composite à deux électrolytes solides, l'un sous forme de verre minéral, l'autre sous forme de polymère organique élastomère.

Un autre objet de l'invention réside dans l'usage de l'électrolyte solide vitreux pour mouiller au moins une partie de la surface des phases solides en présence de façon à rendre ces surfaces de contacts (entièrement minérales) inaccessibles aux composantes de l'électrolyte solide organique (polymère et sel de lithium) et ainsi préserver cette portion de la surface de la formation de films de passivation nuisibles à la qualité des contacts électriques.

La présente invention a encore pour objet d'optimiser les performances électrochimiques d'au moins une électrode composite d'un générateur rechargeable au lithium lorsque ce générateur évolue, dans des conditions difficiles de température ou de tension élevée et sur de longues périodes de temps.

L'invention a encore pour objet de combiner en une seule électrode composite les propriétés avantageuses d'un électrolyte solide minéral avec les propriétés complémentaires associées aux électrolytes solides polymères.

Un autre objet de l'invention est d'attribuer à l'électrolyte solide minéral vitreux le rôle de mouiller au moins en partie les phases solides de façon à protéger les zones ainsi recouvertes, des phénomènes de corrosion et de passivation résultant d'un contact prolongé avec les composantes de l'électrolyte organique et ainsi de protéger la qualité des contacts électriques entre les différentes phases, notamment au niveau des échanges ioniques et électroniques nécessaires aux performances du générateur.

Un autre objet de l'invention est de faire en sorte que l'électrolyte polymère organique apporte pour sa part un niveau de conductivité plus élevé ainsi que des propriétés mécaniques ajustables telles que l'adhésion et la capacité de se déformer essentielle pour un rôle de liant capable ainsi de s'accommoder des variations volumiques des matériaux d'électrode lors du cyclage.

L'invention a enfin pour objet de produire une électrode composite particulièrement utile pour les générateurs de type lithium métal polymère sec fonctionnant à chaud entre 40 et 125°C ou pour les générateurs de type lithium ion dont les voltages de fin de recharge sont souvent supérieurs à 4 Volts.

L'invention concerne une électrode composite d'une cellule électrochimique, cette dernière comportant aussi une seconde électrode et au moins un électrolyte agissant comme séparateur localisé entre l'électrode composite et la seconde électrode. L'électrode composite comprend un collecteur de courant, des particules de matière électrochimiquement active dispersées, le cas échéant un premier additif de conduction électronique et au moins deux électrolytes solides, un premier de nature minérale au moins partiellement vitreux, et un second de nature organique de type électrolyte polymère. L'électrode composite est caractérisée en ce que l'électrolyte de nature minérale mouille au moins une partie de la surface de la matière active dispersée dans l'électrode composite, de l'additif de conduction qui s'y retrouve ainsi que du collecteur de courant de façon à former un sous-réseau minéral poreux. Cette surface, mouillée en partie, est ainsi protégée par une phase minérale étanche, le second électrolyte de nature organique de type électrolyte polymère étant en contact intime avec le sous-réseau minéral poreux de façon à assurer des échanges ioniques au sein de l'électrode composite et avec les autres composantes de la cellule. Le second électrolyte de nature organique de type électrolyte polymère agit en outre comme liant déformable de l'ensemble constitué de l'électrode composite, de son collecteur et du séparateur de la cellule, et comprend le cas échéant un second additif de conduction électronique sous forme dispersée permettant d'optimiser les échanges électroniques au sein de l'électrode composite et son collecteur de courant, l'électrode composite comportant au moins deux électrolytes solides, assurant ainsi des zones où au moins une partie des surfaces d'échange entre phases solides et l'électrolyte de nature minérale au moins partiellement vitreux est rendue inaccessible aux composantes de l'électrolyte de nature organique de type électrolyte polymère et aux contaminants pouvant venir des autres composantes de la cellule électrochimique et sont moins susceptibles de subir la formation de films de passivation ou de dégradation, assurant ainsi des contacts électriques de bonne qualité au sein de l'électrode composite, malgré des conditions de température, de tension ou de cyclage difficiles.

Le premier additif de conduction électronique est de préférence choisi parmi les noirs de carbone, les graphites, les poudres métalliques, les polymères conjugués dopés, les nitrures ou carbures de métaux de transition. Quant au second additif de conduction électronique, il peut être compris parmi les noirs de carbone et les graphites. Par contre, l'électrolyte de nature minérale au moins partiellement vitreux peut être choisi parmi les phosphates ou polyphosphates et les borates ou polyborates d'un métal alcalin, notamment le lithium ou le potassium et les mélanges de ces derniers, conducteurs des ions alcalins.

L'électrolyte de nature minérale peut comporter des éléments formateurs de verres notamment choisis parmi les silices, les siloxanes, aluminates et titanates totalement ou partiellement hydrolysés.

L'électrolyte de nature minérale est par exemple constitué phosphate de lithium de stoichiométrie voisine de LiPO₃ dont le pH est compris entre 4 et 9 et possédant une conductivité minimale de 10⁻¹⁰ S.cm⁻¹ à la température d'opération de la cellule électrochimique. Le phosphate de lithium est préparé par neutralisation rapide d'acide métaphosphorique en solution dans l'eau par un sel de lithium pour obtenir le pH compris entre 4 et 9.

La matière électrochimiquement active présente dans l'électrode composite est notamment choisie parmi les oxydes, les chalcogénures et les dérivés d'oxyanions de métaux de transition, et de lithium ou leurs mélanges. Par exemple, elle est à base d'oxyde de vanadium, de phosphates ou de phosphosulfates de structure olivine de métaux de transition comprenant le fer ou le manganèse ou de Nasicons, notamment des phosphates de fer de type LiFePO₄ à l'état déchargé.

L'additif de conduction électronique peut comprendre des carbones ou des graphites, peut être de type métallique, sous forme dispersée, par exemple l'argent, le cuivre, ou peut être de type semi-métallique, sous forme dispersée, notamment choisi parmi les carbures, nitrures, borures de métaux ou polymères conjugués dopés. Le collecteur de courant peut comprendre de l'aluminium ou du cuivre.

Selon une réalisation préférée, la matière active de l'électrode composite est à un potentiel inférieur à 1,6 volts par rapport à celui du lithium métallique et fonctionne comme anode.

D'autre part, il est préférable mais non essentiel que la fraction volumique de l'électrolyte de nature minérale au moins partiellement vitreux par rapport aux phases dispersées de matière active et d'additif de conduction électronique soit compris entre 2 et 25% de façon à permettre un mouillage au moins partiel des phases solides dispersées, la création d'une porosité ouverte du sous-réseau minéral, et l'adhésion de l'électrolyte de nature minérale au moins partiellement vitreux au collecteur avant l'introduction de l'électrolyte de nature organique de type électrolyte polymère. De plus, il est préférable que la porosité ouverte du sous-réseau soit d'environ 30 à 70%.

Il est préférable que l'électrolyte de nature organique de type électrolyte polymère comporte un sel soluble pour le rendre conducteur, par exemple un sel de lithium.

Selon une autre réalisation préférée, l'électrolyte de nature organique de type électrolyte polymère est principalement constitué d'un polyéther comportant des motifs d'oxyde d'éthylène; ou il peut comprendre un gel constitué d'une matrice de polyéther ou d'un polyélectrolyte, d'un solvant aprotique liquide et d'un sel soluble. Il peut encore comprendre un gel constitué d'une matrice polymère non solvatante, d'un solvant aprotique liquide et d'un sel soluble, par exemple le gel peut être constitué d'une matrice polymère non solvatante, d'un solvant comprenant un composé aprotique et d'un sel de lithium soluble.

Selon une autre réalisation, l'électrolyte de nature organique de type électrolyte polymère est présent au sein de l'électrolyte de nature minérale de façon à constituer un liant déformable de l'électrode composite.

Le séparateur de la cellule électrochimique selon l'invention est normalement constitué d'un électrolyte solide polymère, solvatant ou non, ou d'un polymère, d'un solvant aprotique et d'un sel de lithium dissocié. Le séparateur peut aussi être constitué d'une poudre solide liée par un électrolyte de nature minérale au moins partiellement vitreux selon l'invention, imprégné par un électrolyte liquide ou polymérique.

L'invention concerne aussi un procédé de préparation d'une électrode composite d'une cellule électrochimique, comportant deux électrolytes solides localement distribués, le premier de nature minérale au moins partiellement vitreux, le second de nature organique de type électrolyte polymère, ainsi que son collecteur. Le procédé est caractérisé en ce que l'on prépare une solution aqueuse du premier électrolyte ou de son précurseur dans laquelle on disperse des particules de matériau d'électrode et le cas échéant un additif de conduction, on applique la dispersion obtenue sur un collecteur de courant et on sèche la dispersion de façon à mouiller et à recouvrir au moins en partie les particules, l'additif de conduction électronique et le collecteur de courant, et à former un sous-réseau minéral poreux suffisamment adhérent au collecteur de courant pour permettre sa manipulation sous forme de film, et l'on applique ensuite le cas échéant une dispersion d'un additif de conduction électronique dans un électrolyte de nature organique de type électrolyte polymère contenant un sel de lithium sur le film du sous-réseau minéral poreux de façon à introduire en tout ou en partie au sein du sous-réseau minéral poreux l'électrolyte de nature organique de type polymère afin qu'il serve de liant et de conducteur mixte à l'intérieur du sous-réseau poreux, et d'obtenir l'électrode composite.

Les particules du matériau comportent notamment un premier additif de conduction électronique également dispersé dans la solution aqueuse du premier électrolyte de façon à obtenir après évaporation un revêtement conducteur mixte des ions lithium et des électrons et des électrons. On peut introduire l'électrolyte de nature organique de type électrolyte polymère dans le sous-réseau minéral poreux par voie fondue, sous forme de solution dans un solvant, ou sous forme de prépolymère ou de monomère de basse masse, que l'on réticule ou polymérise après mise en forme.

De préférence, l'électrolyte de nature minérale, est au moins partiellement vitreux et imperméable aux composantes de l'électrolyte de nature organique de type électrolyte polymère, et est choisi parmi les phosphates et polyphosphates, les borates et polyborates d'un métal alcalin notamment le lithium ou le potassium et les mélanges de ces derniers.

L'électrolyte de nature organique est de préférence un polymère solvatant ou non, ou un polymère non solvatant gélifié ou non. Il peut aussi comprendre un solvant aprotique polaire, un sel de lithium dissous et un additif de conduction électronique dispersé, ou être principalement constitué d'un polyéther comportant des motifs d'oxyde d'éthylène.

L'invention concerne aussi un procédé de préparation d'une demi-pile caractérisé en ce que l'on prépare une solution aqueuse d'un électrolyte de nature minérale ou de son précurseur, dans laquelle on disperse des particules de matériau d'électrode et un additif de conduction électronique, on applique la dispersion obtenue sur un collecteur de courant et on sèche la dispersion de façon à mouiller et recouvrir au moins en partie les particules et le collecteur de courant, et à former un sous-réseau composite minéral poreux suffisamment adhérent au collecteur de courant pour permettre sa manipulation sous forme de film, on prépare une dispersion d'une poudre minérale dans une autre solution aqueuse de l'électrolyte de nature minérale ou de son précurseur et on l'applique sur le sous-réseau composite minéral poreux de façon à former une demi-pile poreuse comportant le collecteur, le sous-réseau composite minéral et un séparateur minéral poreux, et on applique un électrolyte polymère contenant un sel de lithium sur la demi-pile poreuse de façon à introduire en tout ou en partie l'électrolyte polymère dans toutes les composantes poreuses, ce dernier servant alors de liant et de conducteur dans le sous-réseau composite minéral poreux - séparateur minéral poreux, formant ainsi une demi-pile à doubles électrolytes solides.

La poudre minérale est de préférence choisie parmi les oxydes isolants et les solides conducteurs des ions lithium, ou les Nasicons.

On peut aussi préparer une demi-pile en appliquant un séparateur électrolyte polymère sur une électrode composite selon l'invention, l'électrolyte polymère étant alors chargé de poudres minérales conductrices ou non des ions lithium.

Le séparateur électrolyte polymère peut être appliqué par pressage à chaud, sous forme de phase liquide fondu, dissous, ou sous forme de prépolymère.

L'invention concerne aussi un procédé de fabrication d'une cellule électrochimique caractérisé en ce que l'on assemble une électrode composite selon l'invention avec un séparateur tel que défini ci-dessus, et l'on ajoute une seconde électrode. Dans ce cas, l'électrode composite est une cathode à base d'oxyde de vanadium ou de phosphate de métal de transition de structure olivine, dans laquelle le collecteur est de l'aluminium, et la seconde électrode peut être une anode de lithium.

L'invention va maintenant être illustrée par les dessins annexés, donnés sans caractère limitatif et dans lesquels
la figure 1a est une illustration des différents types d'interfaces dans une électrode composite;
la figure 1b est une illustration de la formation de films de passivation dans une électrode composite;
la figure 2a illustre une électrode composite selon l'invention après la phase de dépôt de l'électrolyte vitreux et séchage de l'ensemble;
la figure 2b illustre une électrode composite selon l'invention;
la figure 2c illustre une électrode composite selon l'invention, après cyclage;
la figure 2d illustre une électrode composite constituée d'un sous-réseau minéral et séparateur minéral poreux;
la figure 3 illustre un générateur comportant une électrode composite selon l'invention;
la figure 4 est une micrographie d'une électrode composite à double électrolytes solides décrite dans l'exemple 3 selon l'invention ;
la figure 5 montre les résultats de cyclage d'un générateur électrochimique comportant une électrode composite à double électrolytes solides enduite sur un collecteur d'aluminium non protégé selon l'invention ;
la figure 6 montre les résultats de cyclage d'un générateur électrochimique comportant une électrode composite à électrolyte solide polymère enduite sur un collecteur d'aluminium non protégé.

Dans les générateurs au lithium rechargeables, le maintien de la qualité des contacts électriques, i.e. ionique et électronique entre les différentes composantes est essentiel pour une performance optimale en puissance et en capacité de cyclage, notamment pour les applications exigeantes comme les véhicules électriques ou hybrides électriques.

Par qualité des contacts électroniques, on entendra la facilité d'échange des électrons entre les différentes phases constituantes du générateur, notamment entre les collecteurs de courant, les additifs de conduction électronique, généralement du carbone dispersé dans les électrodes composites, ainsi qu'entre les additifs de conduction électronique et les grains du matériau actif de l'une ou l'autre des électrodes.

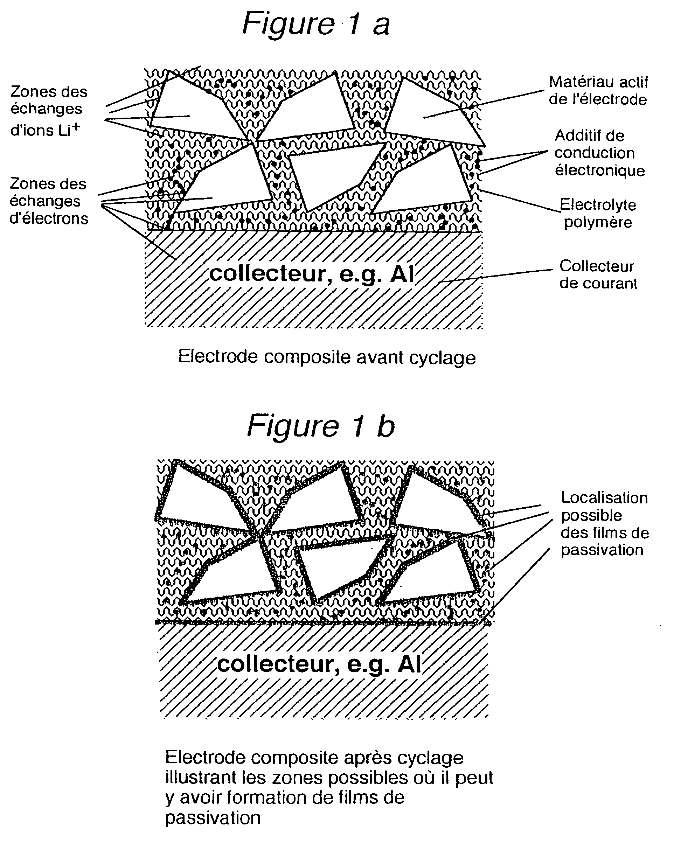

Par qualité des contacts ioniques, on entendra la facilité d'échange des ions lithium (Li⁺) aux interfaces entre les différentes phases du générateur, notamment, dans le cas d'une électrode composite entre la surface des grains de matériaux actifs entre eux et avec l'électrolyte minéral dispersé dans la composite ainsi qu'entre l'électrolyte polymère organique de la composite et celui du séparateur. Ces différents types d'interfaces sont illustrés à la figure 1a.

Généralement les générateurs au lithium rechargeables utilisent des électrolytes organiques constitués d'un solvant aprotique polaire, liquide ou polymère ou d'un gel d'un solvant liquide dans un polymère solvatant ou non et comportent un sel de lithium dissous et plus ou moins dissocié pour assurer la conductivité ionique. Les conditions fortement agressives auxquelles l'électrolyte et les constituants de la pile sont soumis localement, oxydation à la cathode et réduction à l'anode (réduction) entraînent souvent la formation de films de passivation aux interfaces qui tendent à former des films de passivation ou de dégradation et à limiter les échanges ioniques et électroniques aux divers interfaces.

La figure 1b illustre, à titre d'exemple, la formation de certains de ces films de passivation. La formation de ces films dépendra de la stabilité des composantes de l'électrolyte organique, solvant aprotique polaire et sel de lithium, vis-à-vis de la réactivité des phases en présence (matériau actif de l'électrode) et des conditions de fonctionnement du générateur. Avec des électrolytes organiques la formation de tels films est un phénomène général qui augmente en fonction du temps, de la température et de l'usage du générateur et se traduit généralement par l'augmentation des surtensions aux interfaces et finalement par une perte de capacité du générateur.

Une autre caractéristique importante des électrolytes organiques constitués d'un solvant et d'un sel dissous est d'être un conducteur mixte des ions du sel: Li⁺ et anion correspondant et donc d'avoir un nombre de transport du lithium inférieur à un malgré un niveau de conductivité apparemment suffisant. Cette particularité entraîne la formation de gradients de sel lors du fonctionnement du générateur qui accélère les phénomènes de vieillissement au cyclage. En contrepartie l'usage d'électrolytes solide polymère assure la présence d'un liant déformable dont l'intérêt est bien établi au niveau des performances en cyclage et en puissance.

Une façon avantageuse de maintenir la qualité des contacts électriques dans un générateur consisterait utiliser des électrolytes solides minéraux vitreux ou cristallins qui sont en plus des conducteurs spécifiques des ions lithium. Ces électrolytes solides sont moins réactifs cinétiquement ou thermodynamiquement que les liquides ou polymères organiques et ne nécessitent pas l'usage d'un sel de lithium mobile susceptible de réagir avec le matériau actif de l'électrode ou avec le collecteur de courant. D'autre part, à l'état vitreux et élaborés en solution, ces électrolytes ont des propriétés de mouillage qui permettent de préserver au moins une partie des surfaces d'échanges des phénomènes de passivation engendrés par un contact direct avec les composantes d'un électrolyte organique. Les inconvénients de ces électrolytes sont cependant d'être peu conducteurs et surtout d'être rigides et cassants, c'est-à-dire peu accommodant des variations de volume se produisant aux électrodes lors des cycles de décharge/charge. Il est donc difficile de les utiliser comme seul électrolyte d'une composite et encore moins de les utiliser comme liant d'une composite soumise à des variations de volume importantes des électrodes au cours du cyclage.

La présente invention vise à palier à ces inconvénients en associant dans une même électrode composite d'un générateur, l'usage d'un électrolyte minéral solide avec un électrolyte organique solide, préférentiellement un électrolyte polymère.

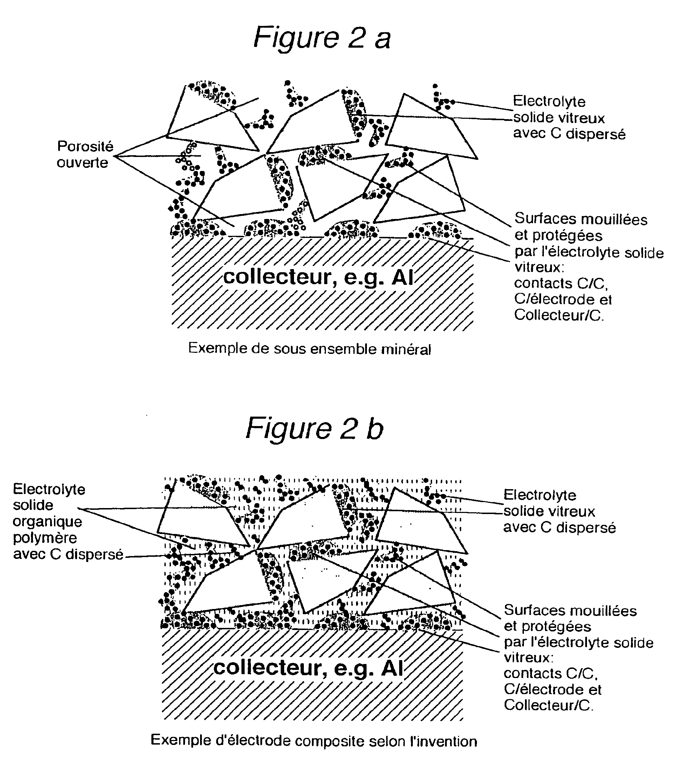

Dans un mode de réalisation préféré de l'invention, on utilisera dans un premier temps un électrolyte solide minéral, préférentiellement vitreux ou partiellement vitreux, en solution aqueuse, pour mouiller et adhérer à au moins une partie de la surface des phases en présence: collecteur de courant, matériau actif de l'électrode et au moins à une partie de l'additif de conduction électronique. Le but de cette étape de préparation est de définir des zones de contact étanches entre l'électrolyte vitreux et chacune des phases solides. Cette première phase de la réalisation de l'électrode composite de l'invention est illustrée à la figure 2a après un séchage de l'ensemble.

Une façon avantageuse de réaliser cette étape consiste à disperser le matériau actif de l'électrode et l'additif de conduction électronique dans une phase aqueuse comprenant l'électrolyte solide vitreux en solution et à l'appliquer sur le collecteur de courant de façon à constituer un sous-réseau minéral poreux.

Dans un second temps, ce sous-réseau minéral est imprégné d'un électrolyte polymère solide organique et d'un sel de lithium présents sous forme de polymère fondu, de solution de polymère ou encore sous forme de prépolymère qui sera réticulé après mise en forme, de façon à constituer une électrode composite à deux électrolytes solides, l'un sous forme de verre minéral, l'autre sous forme de polymère organique élastomère.

Une caractéristique principale de l'invention est l'usage de l'électrolyte solide vitreux pour mouiller au moins une partie de la surface des phases solides en présence de façon à rendre ces surfaces de contacts (entièrement minérales) inaccessibles aux composantes de l'électrolyte solide organique (polymère et sel de lithium) et ainsi préserver cette portion de la surface de la formation de films de passivation nuisible à la qualité des contacts électriques.

La figure 2b illustre à titre d'exemple la façon dont l'invention assure la qualité des contacts électriques au sein de la composite. Ces exemples ne limitent en rien la portée générale de l'invention.

La composition chimique des électrolytes solides minéraux de l'invention est choisie de façon à assurer un caractère au moins partiellement vitreux favorable au mouillage des phases solides, de façon à assurer une conductivité spécifique élevée des ions lithium à l'état solide et surtout de façon à assurer une compatibilité chimique de l'électrolyte solide avec les matériaux actifs de l'électrode de l'invention, notamment lorsque la cathode est choisie parmi les oxydes de vanadium tels V₂O₅, les phosphates de métaux de transition de structure olivine tel LiFePO₄ ou les Nasicons. Le critère de compatibilité est d'éviter une réaction chimique conduisant à une destruction du matériau d'électrode, e.g. V₂O₅ (acide) avec un polysilicate (basique) ou à la formation d'une réaction de surface nuisant à la qualité des contacts électriques. Dans la présente invention, on préférera les électrolytes solide vitreux ne présentant pas un caractère basique ou acide trop fort. Les phosphates et polyphosphates de type LiPO₃ ou borates et polyborates où leurs mélanges présentent des caractéristiques particulièrement avantageuses au niveau de la compatibilité chimique, mais ne constituent pas une limitation de l'invention dans la mesure ou les modes de mise en oeuvre et les critères de bon fonctionnement de l'électrolyte minéral sont respectés. Des additifs formateurs de verre connus de l'homme de l'art sont inclus dans la présente invention comme additifs des électrolytes solides minéraux mentionnés dans la mesure où ils respectent les critères de compatibilité chimique avec les matériaux d'électrodes, notamment ceux présentant une acidité tels les oxydes de vanadium. L'usage de compositions de verre utilisant du potassium est également incluse dans cette invention dans la mesure où le potassium s'échange avec le lithium et n'interfère pas avec le fonctionnement de plusieurs type de générateurs au lithium (référence au brevet potassium YC).

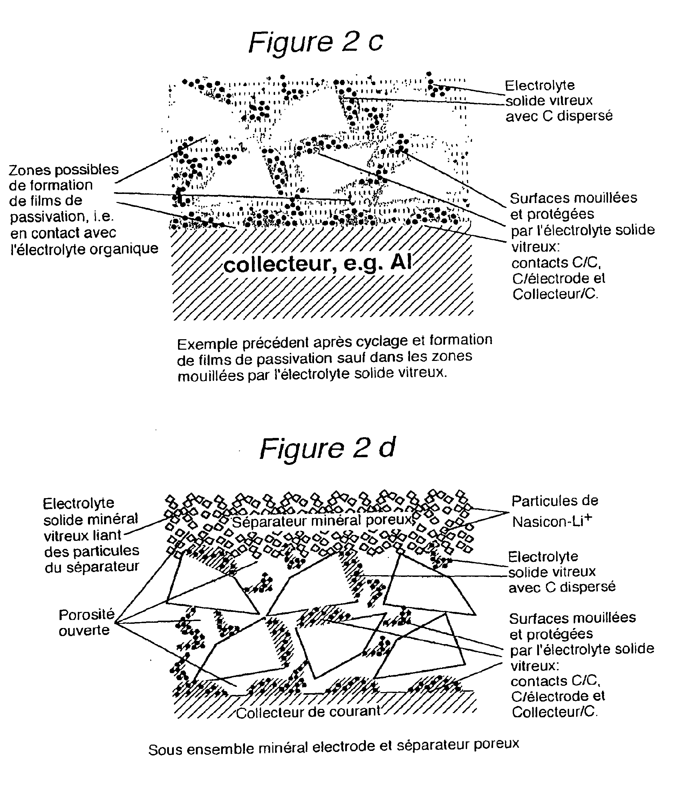

L'invention mise en oeuvre optimisera la fraction volumique de l'électrolyte vitreux par rapport aux fractions volumiques des phases dispersées de matériau actif de l'électrode et de l'additif de conduction électronique de façon à protéger la qualité des contacts électriques sur au moins une partie de la surface des phases en présence et de façon à assurer une porosité ouverte suffisante pour assurer la pénétration de l'électrolyte solide polymère lors de l'imprégnation. On préférera en général un rapport volumique de l'électrolyte solide minéral compris entre 2 et 25% par rapport à l'ensemble du volume occupé par chacune des phases solides minérales dispersées. Plus particulièrement on recherchera un rapport favorisant une porosité ouverte importante permettant l'imprégnation de l'électrolyte solide polymère, notamment entre 30 et 70%. L'optimisation de la fraction volumique de l'électrolyte solide vitreux à l'intérieur des fourchettes indiquées aura l'avantage de limiter l'épaisseur de la couche protectrice de l'électrolyte solide présent en surface des grains de matière active, relativement moins conductrice des ions lithium, de façon à faciliter les échanges ioniques dans l'ensemble de l'électrode composite, l'électrolyte solide polymère prenant le relais pour le transport des ions vers ou en provenance du séparateur et de la contre électrode. On se référera à la Figure 2 a et b pour l'illustration de ces modes de réalisation.

En ce qui concerne l'électrolyte solide polymère, on optimisera la porosité du sous ensemble minéral de façon à ce que l'électrolyte polymère occupe une fraction volumique d'environ 50% de façon à permettre le transport des ions dans la composite et de façon à ce que l'électrolyte polymère puisse jouer le rôle de liant déformable important pour la préservation des performances au cyclage malgré les variations locales de volume de l'électrode lors des cycles successifs. De façon optionnelle l'électrolyte solide polymère à propriété d'élastomère comprendra également une dispersion de l'additif de conduction électronique, de façon à optimiser la qualité des contacts électroniques au sein de l'électrode composite, malgré les variations de volumes locales engendrées par la réaction à l'électrode.

Dans un autre mode de réalisation optimisé de l'invention, on effectuera une opération de compactage mécanique du sous ensemble minéral de façon à optimiser le contenu énergétique de l'électrode composite avant d'effectuer l'opération d'imprégnation de l'électrolyte solide polymère organique. L'homme de l'art comprendra que cette opération pourra comprendre au besoin l'adjonction d'un faible pourcentage (inférieur à quelque pour-cent) d'un liant organique soluble lors de la fabrication du sous-réseau minéral, de façon à maintenir l'intégrité mécanique du sous-réseau lors de son compactage avant son imprégnation.

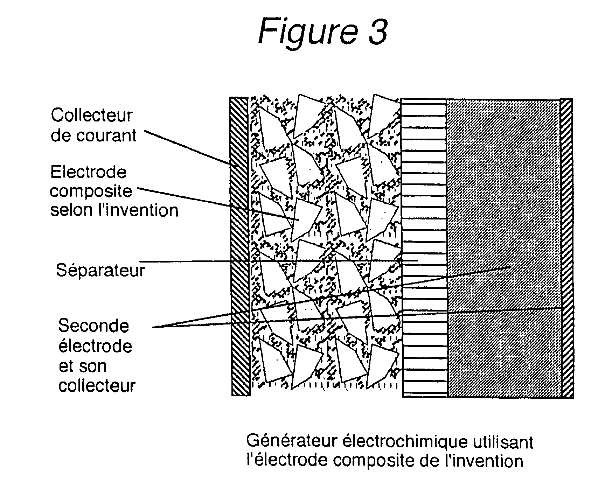

La figure 3 décrit un générateur comportant une des électrodes réalisée selon l'invention.

Dans un autre mode de réalisation de l'invention, on utilisera le sous ensemble minéral décrit précédemment pour effectuer l'application d'une second couche minérale constituée d'une charge solide minérale, conductrice ou non des ions lithium, mise en suspension dans sa solution aqueuse de l'électrolyte vitreux de façon a superposer à l'électrode composite un précurseur du séparateur solide tel que décrit à la figure 3.

La demi-pile minérale constituée du collecteur, du sous ensemble minéral de l'électrode composite et du précurseur solide du séparateur minéral est ensuite imprégnée par le second électrolyte solide préférentiellement de type organique et polymère, accessoirement de type organique liquide. La charge solide minérale non conductrice pourra être constituée de tout solide isolant électronique compatible avec les autres constituants du générateur. La charge solide minérale conductrice des ions Li⁺ pourra être tout solide permettant un transport des ions Li⁺ soit dans sa masse, soit en surface de cette dernière, les structures de type Nasicons de tailles variant entre 0.1 et 5 µ constituent un exemple de charges solides applicables.

D'autres caractéristiques et avantages de l'invention ressortiront d'ailleurs des exemples qui suivent, donnés évidemment sans caractère limitatif.

### Exemples :

### Exemple 1

Dans cet exemple, une solution aqueuse de l'électrolyte solide minéral vitreux de formulation générale (LiPO₃)ₙ est préparée de la façon suivante. Une solution aqueuse de (LiPO₃)ₙ est préparée en dissolvant 75 g d'acide polymétaphosphorique ((HPO₃)ₙ) dans 325 g d'eau et est par la suite en partie ou en totalité neutralisée par l'ajout d'hydroxyde de lithium monohydrate (LiOH·H₂O), dans un rapport molaire (HPO₃)ₙ/LiOH de 1, correspondant à l'ajout de 39,6 g de LiOH·H₂O.

La solution aqueuse de cet électrolyte vitreux est enduite à l'aide d'un gabarit sur un collecteur d'aluminium sans aucun additif de conduction présent dans le revêtement vitreux. L'électrolyte solide vitreux obtenu après séchage sous vide à 150 °C possède une épaisseur de 2 micromètres (µ). Ce dernier feuillard est ensuite monté dans une cellule électrochimique de 4 cm² constituée des élements suivants. Sur l'ensemble collecteur/électrolyte solide à base de (LiPO₃)ₙ est accolé, par un procédé de transfert à chaud, un film mince d'environ 15 microns constitué d'un électrolyte polymère à base d'oxyde d'éthylène contenant le sel de lithium LiTFSI à une concentration correspondant à un rapport molaire O/Li de 30/1. Ce système est ensuite monté face à une anode de lithium par un procédé de transfert à chaud. On en déduira que la composante résistive de l'électrolyte solide vitreux est de l'ordre de 10⁻⁹ S.cm⁻¹ à 25°C. Ce dernier résultat démontre que le recouvrement à base de (LiPO₃)ₙ permet le transport des ions lithium sur de faibles distances, les verres étant par ailleurs reconnus comme des conducteurs spécifiques des cations métalliques.

### Exemple 2

Dans cet exemple, on vérifie la compatibilité de l'électrolyte solide vitreux de l'invention avec les oxydes acides.

Une dispersion constituée de 0,25 g de V₂O₅ est agitée de façon rigoureuse avec 100 mL de la solution aqueuse de (LiPO₃)ₙ préparée selon l'exemple 1. La dispersion ainsi préparée montre une couleur orange typique de l'oxyde V₂O₅. Cette observation démontre la stabilité chimique de la solution aqueuse neutre de l'électrolyte solide de type (MPO₃)ₙ où M est Li ou K avec des matériaux d'électrode acides représentés par V₂O₅. Une solution identique comportant un excès de base (LiOH) a pour conséquence de rendre la solution verdâtre. Une coloration verte est probablement associée à un état réduit de vanadium résultant d'une décomposition possible de l'eau en milieu basique. Une telle observation est également notée avec V₂O₅ lorsque traitée au silicate de sodium. La couleur verte est interprétée par l'effet basique des silicates de métaux alcalins et leur incompatibilité avec les oxydes à caractère acide comme V₂O₅.

### Exemple 3

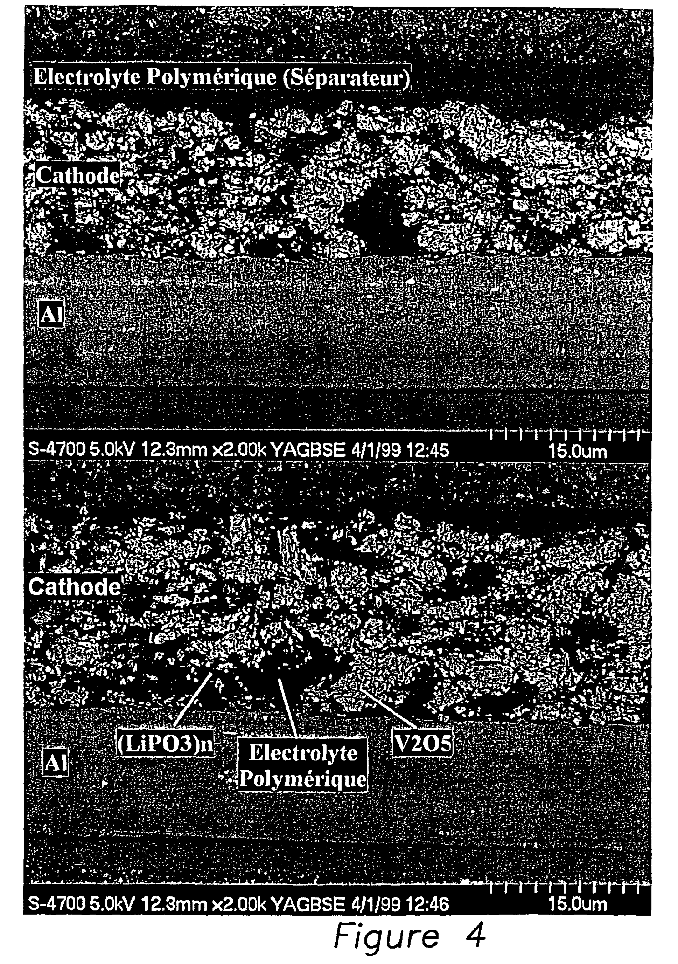

Dans cet exemple, on illustre par des micrographies à balayage électronique l'apparence d'une cathode composite obtenue après enduction sur un collecteur d'aluminium de la dispersion de l'oxyde et du noir de carbone à partir d'une solution aqueuse de l'électrolyte minéral vitreux suivi d'un comblement de la porosité résiduelle par un électrolyte solide polymère formant ainsi la cathode composite à double électrolyte solide (Figure 4).

La cathode composite à double électrolyte solide est préparée de la façon suivante 183 g d'une solution aqueuse contenant 18 % en poids de ((LiPO₃)ₙ), est mélangée de façon énergique avec 253.5 g d'une dispersion aqueuse de noir de carbone conducteur (Ketjenblack EC-600) contenant 5% en poids de noir de carbone. Par la suite, 210,9 g de l'oxyde de vanadium V₂O₅ est ajouté puis dispersé. Cette dispersion est enduite à l'aide d'un gabarit sur un collecteur d'aluminium d'environ 15 microns d'épaisseur. Les rapports de l'oxyde, du noir de carbone et du verre polymétaphosphate de lithium sont choisis de façon telle qu'une porosité résiduelle d'environ 60% demeure dans l'électrode composite après cette première étape. Le film ainsi obtenu, après séchage à 150 °C, est adhérent sur son collecteur et peut être manipulé sans difficulté. Dans le présent exemple, l'épaisseur du film obtenu est de 35 microns et la composition volumique du film sec obtenu est constitué de 77 % de V₂O₅, 15 % de ((LiPO₃)ₙ) et 8 % de noir de carbone. Une partie de cette pré-électrode est ensuite surépandue avec une solution contenant un copolymère de masse molaire voisine de 50 000 g/mol, constitué majoritairement de chaînes d'oxyde d'éthylène comportant également des fonctions réticulables acrylates et de monomères d'oxyde de propylène, avec un sel de lithium LiTFSI à une concentration correspondant à un rapport molaire O/Li de 30. Un solvant aprotique polaire liquide comme l'acétonitrile est utilisé pour faciliter l'enduction à l'aide d'un gabarit et la pénétration du polymère dans l'électrode poreuse. Le surépandage permet d'introduire l'électrolyte polymère dans la porosité de l'électrode composite minérale de façon à réaliser l'électrode composite selon l'invention. Un séchage sous vide de l'électrode composite permet non seulement l'élimination de solvant résiduel mais également une meilleure pénétration de l'électrolyte polymère. Le comblement de la porosité par l'électrolyte polymère est encore plus efficace si le séchage sous vide est effectué à plus haute température. De façon optionnelle, cette opération de surépandage permet également de constituer en tout ou en partie le séparateur du générateur dans la mesure où l'on enduit un excès de polymère. Une micrographie d'une cathode composite comportant un double électrolyte solide et un excès d'électrolyte agissant comme séparateur est illustrée à la Figure 4.

### Exemple 4

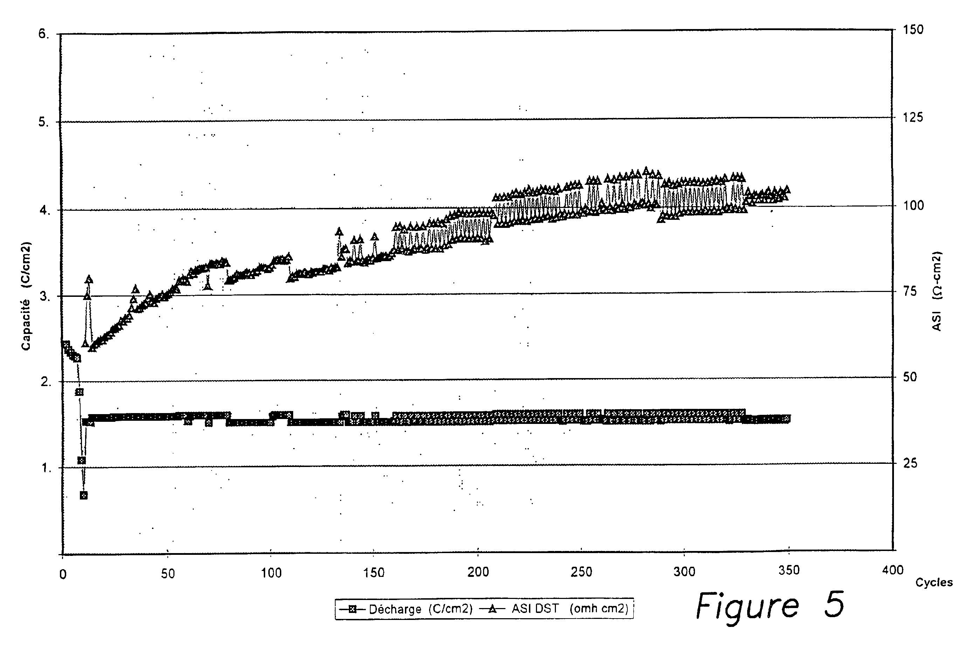

Dans cet exemple, on utilise la cathode composite comportant un double électrolyte de l'exemple 3 pour la réalisation du générateur électrochimique selon les étapes suivantes. Sur l'ensemble collecteur/cathode composite à double électrolyte solide de l'exemple 3 est accolé, par un procédé de transfert à chaud, un film mince d'environ 15 microns constitué d'un électrolyte polymère à base d'un copolymère d'oxyde d'éthylène contenant le sel de lithium LiTFSI à une concentration correspondant à un rapport molaire O/Li de 30/1. L'ensemble collecteur/cathode composite/électrolyte solide polymère est ensuite monté en pile face à une anode de lithium en excès par un procédé de transfert à chaud. La capacité réversible de la cathode composite est de 2,30 C/cm². La Figure 5 illustre le comportement de cette cellule de laboratoire en fonction du cyclage à 60°C. On constate le bon maintien de la capacité lors des cycles successifs ce qui confirme que toute la matière active est bien accessible par l'un ou l'autre des électrolytes solides de la composite. Il est également montré sur la Figure 5 le maintien de la valeur de l'ASI (Area Specific Impedance) qui traduit la somme des phénomènes de résistance ohmique, de transfert de charge et de diffusion et ainsi permet de juger du maintien de la qualité des contacts électriques. Dans cette exemple l'ASI est d'environ 100 après plus de trois cent cinquante (350) cycles.

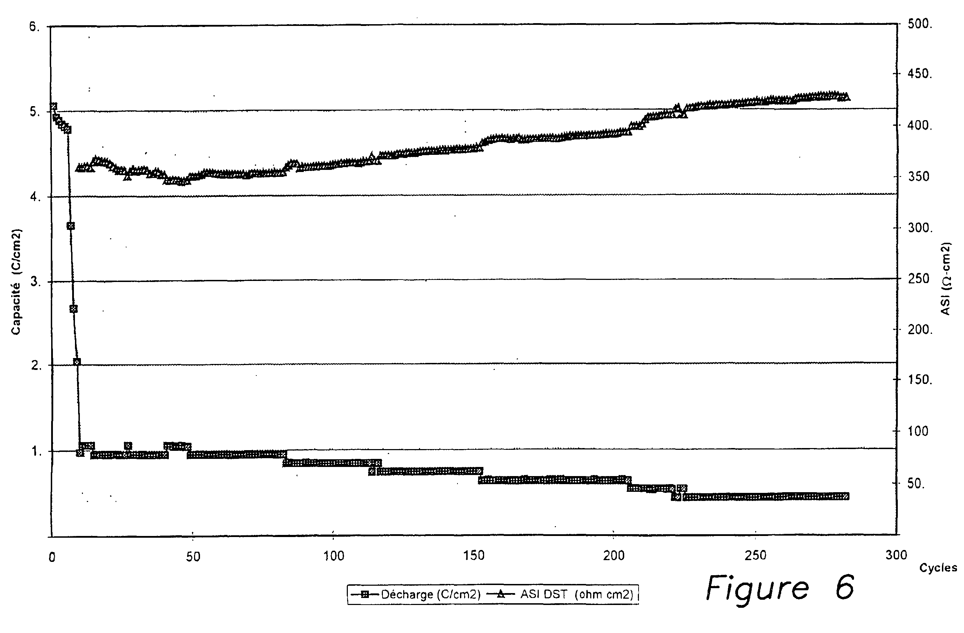

Par opposition, on illustre à la Figure 6 le comportement en cyclage d'une pile similaire à l'exemple précédent à l'exception que la cathode composite à double électrolytes solides est remplacée par une cathode composite à simple électrolyte polymère. Cette dernière cathode est préparée par enduction, sur un collecteur d'aluminium non protégé, à partir d'une dispersion dans l'acétonitrile des éléments suivants: copolymère à base d'oxyde d'éthylène (55 % volume) contenant le sel LiTFSI à une concentration correspondant à un rapport molaire O/Li de 30, la poudre V₂O₅ (40 %) et le noir de carbone (Ketjen black, 5% volume). Après enduction, le film est séché sous vide durant 12 heures. Cette cathode est utilisée, pour l'assemblage de la pile fonctionnant à chaud à 60 °C, face à une anode de lithium préalablement laminée avec un électrolyte polymère de 15 microns agissant comme séparateur. La capacité installée de la pile est de 4.80 C/cm². La Figure 6 montre une perte de capacité importante et des valeurs élevées de l'ASI dès le début du cyclage qui est près de quatre fois supérieure à celle de l'essai précédent dont la pile comportait une cathode à double électrolyte solide (Figure 5), illustrant ainsi l'influence favorable du mode de réalisation de l'invention sur la valeur de la résistance de contact électrique et de diffusion. Cet exemple démontre que l'ajout d'un électrolyte vitreux de type polymétaphosphate de lithium permet de maintenir l'intégrité des échanges ioniques et électroniques entre les interfaces collecteur/cathode et matériaux d'électrode/électrolyte. Le verre de polymétaphosphate de lithium empêche les phénomènes de passivation et corrosion localisés qui diminuent la capacité du générateur.

### Exemple 5

Dans cet exemple, une cathode composite à double électrolytes solides mince d'une épaisseur de 15 microns est préparée selon la procédure décrite à l'exemple 3 à l'exception que l'oxyde de vanadium V₂O₅ est remplacé par LiFePO₄. La cathode composite ainsi préparée est évaluée en cyclage.

La cathode composite mince à double électrolyte solide à base de LiFePO₄ est préparée de la façon suivante. 30 g d'acide (HPO₃)ₙ sont dissous dans 300 g d'eau. La solution aqueuse à base ((HPO₃)ₙ) est par la suite en partie ou en totalité neutralisée par l'ajout d'hydroxyde de lithium monohydrate (LiOH·H₂O), dans un rapport molaire (HPO₃)ₙ/LiOH de 1, correspondant à l'ajout de 15,8 g de LiOH·H₂O. À cette solution, 253,5 g d'une dispersion aqueuse de noir de carbone conducteur (Ketjenblack EC-600) contenant 5% en poids de noir de carbone est mélangée de façon énergique avec la solution aqueuse de (LiPO₃)ₙ, par la suite, 231 g de LiFePO₄ est ajouté puis dispersé. Cette dispersion est enduite à l'aide d'un gabarit sur un collecteur d'aluminium d'environ 15 microns d'épaisseur. L'épaisseur du film ainsi obtenu, après séchage à 150 °C est voisin de 15 micromètres et la composition volumique du film sec obtenu est constitué de 77 % de LiFePO4, 15 % de LiPO₃ et 8 % de noir de carbone. Une partie de cette pré-électrode est ensuite surépandue avec une solution contenant un copolymère de masse molaire voisine de 50 000 g/mol, constitué majoritairement de chaînes d'oxyde d'éthylène comportant également des fonctions réticulables acrylates et de monomères d'oxyde de propylène, avec un sel de lithium LiTFSI à une concentration correspondant à un rapport molaire O/Li de 30. Un solvant aprotique polaire liquide comme l'acétonitrile est utilisé pour faciliter l'enduction à l'aide d'un gabarit et la pénétration du polymère dans l'électrode poreuse. Un séchage sous vide à 80 °C de l'électrode composite permet non seulement l'élimination de solvant résiduel mais également une meilleure pénétration de l'électrolyte polymère.

La cathode composite comportant un double électrolyte est évaluée dans une cellule électrochimique préparée de la façon suivante. Sur l'ensemble collecteur/cathode composite à double électrolyte solide à base de LiFePO₄ est accolé, par un procédé de transfert à chaud, un film mince d'environ 15 micron constitué d'un électrolyte polymère à base d'oxyde d'éthylène contenant un sel de lithium à une concentration correspondant à un rapport molaire O/Li de 30/1. L'ensemble collecteur/cathode composite/électrolyte solide polymère est ensuite monté en pile face à une anode de lithium en excès par un procédé de transfert à chaud. La capacité réversible de la cathode composite est voisine de 1 C/cm2. Lorsque cyclée à 80°C, cette pile montre une utilisation initiale correspondant à la capacité de la cathode prévue ce qui confirme que toute la matière active est bien accessible par l'un ou l'autre des électrolytes solides de la composite. Il est également montré le maintien de la valeur de l'ASI (Area Specific Impedance) qui traduit la somme des phénomènes de résistance ohmique, de transfert de charge et de diffusion et ainsi permet de juger du maintien de la qualité des contacts électriques.

### Exemple 6

Dans cet exemple, la cathode composite poreuse à liant minérale est identique à celle préparée à l'exemple 4, à l'exception près que la porosité restante dans l'électrode composite est comblée par une matrice polyéther gonflée par au moins un solvant aprotique contenant au moins un sel alcalin.

On fabrique un générateur électrochimique en utilisant une électrode minérale poreuse de l'exemple 4 constituée de phosphate de fer, (LiFePO₄) dans une fraction volumique de 86 %, du noir de carbone (Ketjenblack EC-600) dans une fraction volumique de 6 % et de l'électrolyte solide minérale LiPO₃ dans une fraction volumique de 8 %. La dite électrode positive possède une capacité de 4,2 Coulomb/cm². L'électrode positive à double électrolyte solide est préparée selon la procédure décrite dans l'exemple 5. L'électrode négative poreuse contient du graphite dans une fraction volumique de 82 % et un polymère le fluorure de vinyldiene co-hexafluoro propène, dans une fraction volumique de 12 %. La dite électrode négative possède une capacité de 3,3 Coulomb/cm². L'électrode négative est obtenue par enduction en phase solvant (acétone) sur un collecteur de courant en cuivre de 18 µm d'épaisseur. L'électrolyte polymère gélifié est préparé à partir d'une solution contenant une fraction volumique de 80 % le mélange de solvant tétraéthyl sulfamide (TESA) plus carbonate d'éthylène et de l'hexafluorophosphate de lithium à une concentration de 1 molaire (disponible chez Tomyama) et dans une fraction volumique de 20 % le polymère glycérol-tri[poly(oxyéthylène)(oxypropylène)] triacrylate. Cette solution est par la suite surépandue sur l'anode et la cathode à électrolyte minérale de façon à combler la porosité de ces deux électrodes sans laisser d'excès à la surface des électrodes. Après avoir été imbibées par surépandage l'électrode négative et l'électrode positive sont irradiées par faisceau d'électrons, EB, à une dose de 50 kGy (5 Mrad) de façon à réticuler le polymère glycérol-tri[poly-(oxyéthylène)(oxypropylène)] triacrylate. Le séparateur consiste en une membrane polymère à base de polymère glycérol-tri[poly-(oxyéthylène)(oxypropylène)] triacrylate d'une épaisseur de 15 µm contenant de l'hexafluorophosphate de lithium (LiPF₆) dans un rapport molaire O/Li = 30). Au moment de l'assemblage du générateur électrochimique, le séparateur est immergé 30 minutes dans le mélange de solvant tétraéthyl sulfamide (TESA) plus carbonate d'éthylène (dans un rapport molaire 1:1) contenant de l'hexafluorophosphate de lithium à une concentration de 1 molaire. Suite à l'immersion le solvant occupe 60 % du volume du séparateur. Le générateur électrochimique est par la suite rapidement assemblé par pressage léger à 25°C de l'électrode négative du séparateur et de l'électrode positive et mis dans un sachet étanche. Après 54 cycles de décharge profonde à C/6 et de recharge en C/8, entre des limites de voltage de 4.0 V et 2.5 V on obtient toujours plus de 80 % de la capacité.

## Revendications

1. Cellule électrochimique comprenant une électrode composite, une seconde électrode et au moins un électrolyte agissant comme séparateur localisé entre l'électrode composite et la seconde électrode, ladite électrode composite comprenant un collecteur de courant, des particules de matière électrochimiquement active, un premier additif de conduction électronique et au moins deux électrolytes solides, un premier électrolyte de nature minérale au moins partiellement vitreux, et un second électrolyte de nature organique de type électrolyte polymère, **caractérisée en ce que** l'électrolyte de nature minérale forme un sous-réseau minéral poreux dans lequel les particules de matière active sont dispersées, l'électrolyte de nature minérale mouillant ainsi au moins une partie de la surface de la matière active dispersée dans le sous-réseau minéral poreux de l'électrode composite, du premier additif de conduction qui s'y retrouve et du collecteur de courant, lesdites surfaces mouillées en partie étant ainsi protégées par le sous-réseau minéral poreux ; le second électrolyte de nature organique de type électrolyte polymère comblant les porosités du sous-réseau minéral poreux de façon à assurer des échanges ioniques au sein de l'électrode composite et avec les autres composantes de la cellule, ledit second électrolyte de nature organique de type électrolyte polymère comprenant le cas échéant un second additif de conduction électronique sous forme dispersée permettant d'optimiser les échanges électroniques au sein de l'électrode composite, le sous-réseau minéral poreux assurant ainsi des zones où au moins une partie des surfaces mouillées par l'électrolyte de nature minérale est rendue inaccessible aux composantes de l'électrolyte de nature organique de type électrolyte polymère et aux contaminants pouvant venir des autres composantes de la cellule électrochimique.

2. Cellule électrochimique selon la revendication 1, **caractérisée en ce que** le premier additif de conduction électronique est choisi parmi les noirs de carbone, les graphites, les poudres métalliques, les polymères conjugués dopés, les nitrures ou carbures de métaux de transition.

3. Cellule électrochimique selon la revendication 1, **caractérisée en ce que** le second additif de conduction électronique est choisi parmi les noirs de carbone et les graphites.

4. Cellule électrochimique selon la revendication 1, **caractérisée en ce que** l'électrolyte de nature minérale au moins partiellement vitreux est choisi parmi les phosphates ou polyphosphates et les borates ou polyborates d'un métal alcalin, et les mélanges de ces derniers, conducteurs des ions alcalins.

5. Cellule électrochimique selon la revendication 4, **caractérisée en ce que** le métal alcalin est principalement constitué de lithium ou de potassium.

6. Cellule électrochimique selon les revendications 1, 2, 3 4 ou 5, **caractérisée en ce que** l'électrolyte de nature minérale comporte des éléments formateurs de verres.

7. Cellule électrochimique selon la revendication 6, **caractérisée en ce que** les éléments formateurs de verre sont choisis parmi les silices, les siloxanes, aluminates et titanates organo-métalliques totalement ou partiellement hydrolysés.

8. Cellule électrochimique selon la revendication 1, **caractérisée en ce que** l'électrolyte de nature minérale est constitué de phosphate de lithium de stoichiométrie voisine de LiP03 dont le pH est compris entre 4 et 9 et possédant une conductivité minimale de 10⁻¹⁰ S.cm⁻¹ à la température d'opération de la cellule électrochimique.

9. Cellule électrochimique selon la revendication 8, **caractérisée en ce que** le phosphate de lithium est préparé par neutralisation rapide d'acide métaphosphorique en solution dans l'eau par un sel de lithium pour obtenir ledit pH compris entre 4 et 9.

10. Cellule électrochimique selon la revendication 1, **caractérisée en ce qu'**elle est une cathode qui comprend ladite matière active laquelle est choisie parmi les oxydes, les chalcogénures et les dérivés oxyanions de métaux de transition et de lithium, et leurs mélanges.

11. Cellule électrochimique selon la revendication 10, **caractérisée en ce que** ladite matière active est à base d'oxyde de vanadium.

12. Cellule électrochimique selon la revendication 10, **caractérisée en ce que** ladite matière active est à base de phosphates ou de phosphosulfates de structure olivine de métaux de transition comprenant le fer ou le manganèse ou de Nasicons.

13. Cellule électrochimique selon la revendication 12, **caractérisée en ce que** ledit phosphate est un phosphate de fer de type LiFeP04 à l'état déchargé.

14. Cellule électrochimique selon la revendication 2, **caractérisée en ce que** le premier additif de conduction électronique est de type métallique, sous forme dispersée.

15. Cellule électrochimique selon la revendication 14, **caractérisée en ce que** l'additif de conduction électronique de type métallique est choisi parmi l'argent, le cuivre.

16. Cellule électrochimique selon la revendication 2, **caractérisée en ce que** l'additif de conduction électronique est de type semi-métallique, sous forme dispersée.

17. Cellule électrochimique selon la revendication 16, **caractérisée en ce que** l'additif de conduction électronique de type semi-métallique est choisi parmi les carbures, nitrures et borures de métaux.

18. Cellule électrochimique selon la revendication 1, **caractérisée en ce que** le collecteur de courant comprend de l'aluminium.

19. Cellule électrochimique selon la revendication 1, **caractérisée en ce que** le collecteur de courant comprend du cuivre.

20. Cellule électrochimique selon la revendication 1, **caractérisée en ce que** la matière active de l'électrode composite est à un potentiel inférieur à 1,6 volts par rapport à celui du lithium métallique et fonctionne comme anode.

21. Cellule électrochimique selon la revendication 1, **caractérisée en ce que** la fraction volumique de l'électrolyte de nature minérale au moins partiellement vitreux par rapport aux phases dispersées de matière active et d'additif de conduction électronique se situe entre environ 2 à 25% de façon à permettre un mouillage au moins partiel des phases solides dispersées, la création d'une porosité ouverte du sous-réseau minéral, et l'adhésion de l'électrolyte de nature minérale au moins partiellement vitreux audit collecteur avant l'introduction de l'électrolyte de nature organique de type électrolyte polymère.

22. Cellule électrochimique selon la revendication 21, **caractérisée en ce que** ladite porosité ouverte est d'environ 30 à 70%.

23. Cellule électrochimique selon la revendication 1, **caractérisée en ce que** ledit électrolyte de nature organique de type électrolyte polymère comporte un sel soluble pour le rendre conducteur.

24. Cellule électrochimique selon la revendication 23, **caractérisée en ce que** ledit sel soluble est un sel de lithium.

25. Cellule électrochimique selon la revendication 1, **caractérisée en ce que** ledit électrolyte de nature organique de type électrolyte polymère est principalement constitué d'un polyéther comportant des motifs d'oxyde d'éthylène.

26. Cellule électrochimique selon la revendication 1, **caractérisée en ce que** ledit électrolyte de nature organique de type électrolyte polymère comprend un gel constitué d'une matrice de polyéther ou d'un polyélectrolyte, d'un solvant aprotique liquide et d'un sel soluble.

27. Cellule électrochimique selon la revendication 1, **caractérisée en ce que** ledit électrolyte de nature organique de type électrolyte polymère comprend un gel constitué d'une matrice polymère non solvatante, d'un solvant aprotique liquide et d'un sel soluble.

28. Cellule électrochimique selon la revendication 1 comprenant une électrode composite, une seconde électrode et au moins un électrolyte constituant un séparateur, localisé entre l'électrode composite et ladite seconde électrode, **caractérisée en ce que** ledit séparateur est constitué d'un électrolyte solide polymère.

29. Cellule électrochimique selon la revendication 1, **caractérisée en ce que** ledit séparateur localisé entre l'électrode composite et la seconde électrode est constitué d'un polymère, d'un solvant aprotique et d'un sel de lithium dissocié.

30. Cellule électrochimique selon la revendication 29, **caractérisée en ce que** ledit polymère compris dans le séparateur est solvatant.

31. Cellule électrochimique selon la revendication 29, **caractérisée en ce que** ledit polymère compris dans le séparateur est non solvatant.

32. Cellule électrochimique selon la revendication 1, **caractérisée en ce que** ledit séparateur localisé entre l'électrode composite et la seconde électrode est constitué d'une poudre solide liée par un électrolyte de nature minérale au moins partiellement vitreux imprégné par un électrolyte liquide ou polymérique.

33. Procédé de préparation d'une électrode composite d'une cellule électrochimique, ladite électrode composite comportant deux électrolytes solides localement distribués, le premier de nature minérale au moins partiellement vitreux, le second de nature organique de type électrolyte polymère, ainsi que son collecteur, **caractérisé en ce que** l'on prépare une solution aqueuse du premier électrolyte ou de son précurseur dans laquelle on disperse des particules de matériau d'électrode, on applique la dispersion obtenue sur un collecteur de courant et on sèche ladite dispersion de façon à mouiller et à recouvrir au moins en partie lesdites particules et le collecteur de courant, et à former un sous-réseau minéral poreux suffisamment adhérent au collecteur de courant pour permettre sa manipulation sous forme de film, et l'on applique ensuite le cas échéant une dispersion d'un deuxième additif de conduction électronique dans un électrolyte de nature organique de type électrolyte polymère contenant un sel de lithium sur le film du sous-réseau minéral poreux de façon à introduire en tout ou en partie au sein du sous-réseau minéral poreux l'électrolyte de nature organique de type polymère afin qu'il serve de liant déformable et de conducteur mixte à l'intérieur du sous-réseau poreux, et d'obtenir l'électrode composite.

34. Procédé selon la revendication 33, **caractérisé en ce que** les particules du matériau d'électrode comportent un premier additif de conduction électronique dans la solution aqueuse du premier électrolyte.

35. Procédé selon la revendication 33, **caractérisé en ce que** l'on introduit l'électrolyte de nature organique de type électrolyte polymère dans le sous-réseau minéral poreux par voie fondue.

36. Procédé selon la revendication 33, **caractérisé en ce que** l'on introduit l'électrolyte de nature organique de type électrolyte polymère dans le sous-réseau minéral poreux sous forme de solution dans un solvant.

37. Procédé selon la revendication 33, **caractérisé en ce que** l'on introduit l'électrolyte de nature organique de type électrolyte polymère dans le sous-réseau minéral poreux, sous forme de prépolymère ou de monomère de basse masse, que l'on réticule ou polymérise après mise en forme.

38. Procédé selon la revendication 33, **caractérisé en ce que** le premier additif de conduction est compris parmi les noirs de carbone, les graphites, les poudres métalliques ou les composés semi-métalliques à base de carbures, de nitrures, de borures ou de siliciures de métaux.

39. Procédé selon la revendication 33, **caractérisé en ce que** le second additif de conduction est compris parmi les noirs de carbone et les graphites.

40. Procédé selon la revendication 33, **caractérisé en ce que** les particules de matériau d'électrode sont choisies parmi les oxydes, chalcogénures, phosphates de structure olivine, les Nasicons comportant des anions phosphates ou sulfates.

41. Procédé selon la revendication 34, **caractérisé en ce que** l'on utilise une fraction volumique d'électrolyte de nature minérale comprise entre 2 et 25% par rapport au volume de matériau d'électrode et d'additif de conduction électronique et l'on forme le sous-réseau minéral poreux de façon à ce que sa porosité se situe entre environ 30 et 70%.

42. Procédé selon la revendication 34, **caractérisé en ce que** l'électrolyte de nature minérale, est au moins partiellement vitreux et imperméable aux composantes de l'électrolyte de nature organique de type électrolyte polymère, et est choisi parmi les phosphates et polyphosphates, les borates et polyborates d'un métal alcalin et les mélanges de ces derniers.

43. Procédé selon la revendication 42, **caractérisé en ce que** le métal alcalin est principalement constitué de lithium ou de potassium.

44. Procédé selon la revendication 34, **caractérisé en ce que** l'électrolyte de nature minérale comporte des éléments formateurs de verre.

45. Procédé selon la revendication 44, **caractérisé en ce que** les éléments formateurs de verre sont choisis parmi les silices, les siloxanes, les aluminates et les titanates organo-métalliques totalement ou partiellement hydrolysés.

46. Procédé selon la revendication 34, **caractérisé en ce que** l'électrolyte de nature minérale comprend du phosphate de lithium de stoichiométrie voisine de LiPO₃.

47. Procédé selon la revendication 34, **caractérisé en ce que** l'électrolyte de nature organique est un polymère solvatant.

48. Procédé selon la revendication 34, **caractérisé en ce que** l'électrolyte de nature organique est un polymère non solvatant.

49. Procédé selon la revendication 34, **caractérisé en ce que** l'électrolyte de nature organique est un polymère gélifié.

50. Procédé selon la revendication 34, **caractérisé en ce que** l'électrolyte de nature organique est un polymère non gélifié.

51. Procédé selon les revendications 47, 48, 49 ou 50, **caractérisé en ce que** l'électrolyte de nature organique comprend un solvant aprotique polaire, un sel de lithium dissous.

52. Procédé selon la revendication 34, **caractérisé en ce que** l'électrolyte de nature organique de type électrolyte polymère est principalement constitué d'un polyéther comportant des motifs d'oxyde d'éthylène.

53. Procédé de préparation d'une demi-pile **caractérisé en ce que** l'on prépare une solution aqueuse d'un électrolyte de nature minérale au moins partiellement vitreux ou de son précurseur, dans laquelle on disperse des particules de matériau d'électrode et un additif de conduction électronique, on applique la dispersion obtenue sur un collecteur de courant et on sèche ladite dispersion de façon à mouiller et recouvrir au moins en partie lesdites particules et le collecteur de courant, et à former un sous-réseau composite minéral poreux suffisamment adhérent au collecteur de courant pour permettre sa manipulation sous forme de film, on prépare une dispersion d'une poudre minérale dans une autre solution aqueuse de l'électrolyte de nature minérale au moins partiellement vitreux ou de son précurseur et on l'applique sur le sous-réseau composite minéral poreux de façon à former une demi-pile poreuse comportant le collecteur, le sous-réseau composite minéral et un séparateur minéral poreux, et on applique un électrolyte organique de type polymère contenant un sel de lithium sur la demi-pile poreuse de façon à introduire en tout ou en partie l'électrolyte polymère, ce dernier servant alors de liant et de conducteur dans le sous-réseau composite minéral poreux - séparateur minéral poreux, formant ainsi une demi-pile à doubles électrolytes solides.

54. Procédé selon la revendication 53, **caractérisé en ce que** la poudre minérale est choisie parmi les oxydes isolants et les solides conducteurs des ions lithium.

55. Procédé selon la revendication 54, **caractérisé en ce que** la poudre minérale est choisie parmi les Nasicons.

56. Procédé selon la revendication 53, **caractérisé en ce que** l'électrolyte polymère est chargé de poudres minérales conductrices ou non des ions lithium.

57. Procédé selon la revendication 53, **caractérisé en ce que** l'on applique le séparateur électrolyte polymère par pressage à chaud, sous forme de phase liquide fondu, dissous, ou sous forme de prépolymère.

58. Cellule électrochimique selon la revendication 1, **caractérisé en ce que** la seconde électrode est une électrode composite

59. Cellule électrochimique selon la revendication 1, **caractérisé en ce que** l'électrode composite est une cathode à base d'oxyde de vanadium ou de phosphate de métal de transition de structure olivine, dans laquelle le collecteur est de l'aluminium.

60. Cellule électrochimique selon la revendication 1, **caractérisé en ce que** la seconde électrode est une anode de lithium.

## Claims

1. An electrochemical cell comprising a composite electrode, a second electrode and at least one electrolyte acting as a separator localized between the composite electrode and the second electrode, said composite electrode comprising a current collector, particles of electrochemically active material, a first electronic conduction additive and at least two solid electrolytes, a first at least partly glassy electrolyte of mineral nature and a second electrolyte of organic nature of the polymeric electrolyte type, **characterized in that** the electrolyte of mineral nature forms a porous mineral sub-lattice in which the particles of active material are dispersed, the electrolyte of mineral nature thereby wetting at least one portion of the surface of the active material dispersed in the porous mineral sub-lattice of the composite electrode, of the first conduction additive which is found therein and of the current collector, said partly wetted surfaces being thereby protected by the porous mineral sub-lattice; the second electrolyte of organic nature of the polymeric electrolyte type filling the porosities of the porous mineral sub-lattice so as to ensure ion exchanges within the composite electrode and with the other components of the cell, said second electrolyte of organic nature of the polymeric electrolyte type if necessary comprising a second electronic conduction additive in dispersed form allowing optimization of the electron exchanges within the composite electrode, the porous mineral sub-lattice thereby providing areas where at least one portion of the surfaces wetted by the electrolyte of mineral nature is made inaccessible to the components of the electrolyte of organic nature of the polymeric electrolyte type and to the contaminants which may come from the other components of the electrochemical cell.

2. The electrochemical cell according to claim 1, **characterized in that** the first electronic conduction additive is selected from carbon blacks, graphites, metal powders, doped conjugate polymers, nitrides, carbides of transition metals.

3. The electrochemical cell according to claim 1, the second electronic conduction additive is selected from carbon blacks and graphites.

4. The electrochemical cell according to claim 1, **characterized in that** the at least partly glassy electrolyte of mineral nature is selected from phosphates or polyphosphates and borates or polyborates of an alkaline metal, and mixtures of the latter, conductive of alkaline ions.

5. The electrochemical cell according to claim 4, **characterized in that** the alkaline metal mainly consists of lithium or potassium.

6. The electrochemical cell according to claims 1, 2, 3, 4 or 5, **characterized in that** the electrolyte of mineral nature includes elements forming glasses.

7. The electrochemical cell according to claim six, **characterized in that** the glass-forming elements are selected from silicas, siloxanes, totally or partly hydrolyzed organometal aluminates and titanates.

8. The electrochemical cell according to claim 1, **characterized in that** the electrolyte of mineral nature consists of lithium phosphate with stoichiometry close to LiPO₃, the pH of which is comprised between 4 and 9 and having a minimum conductivity of 10⁻¹⁰ S.cm⁻¹ at the operating temperature of the electrochemical cell.

9. The electrochemical cell according to claim 8, **characterized in that** the lithium phosphate is prepared by fast neutralisation of metaphosphoric acid in the solution in water by a lithium salt in order to obtain said pH comprised between 4 and 9.

10. The electrochemical cell according to claim 1, **characterized in that** it is a cathode which comprises said active material which is selected from oxides, chalcogenides, and oxyanion derivatives of transition metals and lithium, and mixtures thereof.

11. The electrochemical cell according to claim 10, **characterized in that** said active material is based on vanadium oxide.

12. The electrochemical cell according to claim 10, **characterized in that** said active material is based on phosphates or phosphosulphates with an olivine structure of transition metals comprising iron or manganese or Nasicons.

13. The electrochemical cell according to claim 12, **characterized in that** said phosphate is iron phosphate of the LiFePO₄ type in the discharged state.

14. The electrochemical cell according to claim 2, **characterized in that** the first electronic conduction additive is of the metal type, in dispersed form.

15. The electrochemical cell according to claim 14, **characterized in that** the electronic conduction additive of the metal type is selected from silver, copper.

16. The electrochemical cell according to claim 2, **characterized in that** the electronic conduction additive is of the semi-metal type, in dispersed form.

17. The electrochemical cell according to claim 16, **characterized in that** the electronic conduction additive of the semimetal type is selected from metal carbides, nitrides and borides.

18. The electrochemical cell according to claim 1, **characterized in that** the current collector comprises aluminium.

19. The electrochemical cell according to claim 1, **characterized in that** the current collector comprises copper.

20. The electrochemical cell according to claim 1, **characterized in that** the active material of the composite electrode is at a potential of less than 1.6 volts relatively to that of metal lithium and operates as an anode.

21. The electrochemical cell according to claim 1, **characterized in that** the volume fraction of said at least partly glassy electrolyte of mineral nature with respect to the dispersed phases of active material and of electronic conduction additive is located between about 2 to 25% so as to allow at least partial wetting of the dispersed solid phases, creation of open porosity of the mineral sub-lattice, and adhesion of said at least partly glassy electrolyte of mineral nature to said collector before introducing the electrolyte of organic nature of the polymeric electrolyte type.

22. The electrochemical cell according to claim 21, **characterized in that** said open porosity is from about 30 to 70%.

23. The electrochemical cell according to claim 1, **characterized in that** said electrolyte of organic nature of the polymeric electrolyte type includes a soluble salt for making it conductive.

24. The electrochemical cell according to claim 23, **characterized in that** said soluble salt is a lithium salt.

25. The electrochemical cell according to claim 1, **characterized in that** said electrolyte of organic nature of the polymeric electrolyte type mainly consists of polyether including ethylene oxide units.

26. The electrochemical cell according to claim 1, **characterized in that** said electrolyte of organic nature of the polymeric electrolyte type comprises a gel consisting of a polyether matrix or of a polyelectrolyte, a liquid aprotic solvent and a soluble salt.

27. The electrochemical cell according to claim 1, **characterized in that** said electrolyte of organic nature of the polymeric electrolyte type comprises a gel consisting of a non-solvating polymeric matrix, of a liquid aprotic solvent and of a soluble salt.

28. The electrochemical cell according to claim 1, comprising a composite electrode, a second electrode and at least one electrolyte forming a separator, localized between the composite electrode and said second electrode, **characterized in that** said separator consists of a polymeric solid electrolyte.

29. The electrochemical cell according to claim 1, **characterized in that** said separator localized between the composite electrode and the second electrode consists of a polymer, of an aprotic solvent and a dissociated lithium salt.

30. The electrochemical cell according to claim 29, **characterized in that** said polymer comprised in the separator is a solvating agent.

31. The electrochemical cell according to claim 29, **characterized in that** said polymer comprised in the separator is a non-solvating agent.

32. The electrochemical cell according to claim 1, **characterized in that** said separator localized between the composite electrode and the second electrode consists of a solid powder bound by an at least partly glassy electrolyte of mineral nature impregnated with a liquid or polymeric electrolyte.

33. A method for preparing a composite electrode of an electrochemical cell, said composite electrode including two locally distributed solid electrolytes, the first being at least partly glassy of mineral nature, the second of organic nature of the polymeric electrolyte type, as well as its collector, **characterized in that** an aqueous solution of the first electrolyte or of its precursor is prepared in which particles of electrode material are dispersed, the obtained dispersion is applied on a current collector and said dispersion is dried so as to wet and cover at least partly said particles and the current collector, and to form a porous mineral sub-lattice which is sufficiently adherent to the current collector in order to allow its handling as a film, and next, if need be, a dispersion of a second electronic conduction additive is applied in an electrolyte of organic nature of the polymeric electrolyte type containing a lithium salt onto the film of the porous mineral sub-lattice so as to totally or partly introduce within the porous mineral sub-lattice the electrolyte of organic nature of the polymeric type so that it is used as a deformable binder and mixed conductor inside the porous sub-lattice, and to obtain the composite electrode.

34. The method of according to claim 33, **characterized in that** the particles of the electrode material included a first electronic conduction additive in the aqueous solution of the first electrolyte.

35. The method according to claim 33, **characterized in that** the electrolyte of organic nature of the polymeric electrolyte type is introduced into the porous mineral sub-lattice via a melting route.

36. The method according to claim 33, **characterized in that** the electrolyte of organic nature of the polymeric electrolyte type is introduced into the porous mineral sub-lattice as a solution in a solvent.

37. The method according to claim 33, **characterized in that** the electrolyte of the organic nature of the polymeric electrolyte type is introduced into the porous mineral sub-lattice as a pre-polymer or low mass monomer, which is cross-linked or polymerized after shaping.

38. The method according to claim 33, **characterized in that** the first conduction additive is comprised among carbon blacks, graphites, metal powders or semi-metal compounds based on carbides, nitrides, borides or silicides of metals.

39. The method according to claim 33, **characterized in that** the second conduction additive is comprised among carbon blacks and graphites.

40. The method according to claim 33, **characterized in that** the electrode material particles are selected from oxides, chalcogenides, phosphates with olivine structure, Nasicons including phosphate or sulphate anions.

41. The method according to claim 34, **characterized in that** a volume fraction of electrolyte of mineral nature comprised between 2 and 25% based on the volume of electrode material and of electronic conduction additive is used and the porous mineral sub-lattice is formed so that its porosity is located between about 30 and 70%.

42. The method according to claim 34, **characterized in that** the electrolyte of mineral nature is at least partly glassy and impervious to the components of the electrolyte of organic nature of the polymeric electrolyte type, and is selected from phosphates and polyphosphates, borates and polyborates of an alkaline metal and mixtures of the latter.

43. The method according to claim 42, **characterized in that** the alkaline metal mainly consists of lithium or potassium.

44. The method according to claim 34, **characterized in that** the electrolyte of mineral nature includes glass-forming elements.

45. The method according to claim 44, **characterized in that** the glass-forming elements are selected from silicas, siloxanes, totally or partly hydrolyzed organometal aluminates and titanates.

46. The method according to claim 34, **characterized in that** the electrolyte of mineral nature comprises lithium phosphate with stoichiometry close to LiP0₃.

47. The method according to claim 34, **characterized in that** the electrolyte of organic nature is a solvating polymer.

48. The method according to claim 34, **characterized in that** the electrolyte of organic nature is a non-solvating polymer.

49. The method according to claim 34, **characterized in that** the electrolyte of organic nature is a gelled polymer.

50. The method according to claim 34, **characterized in that** the electrolyte of organic nature is a non-gelled polymer.

51. The method according to claims 47, 48, 49 or 50, **characterized in that** the electrolyte of organic nature comprises a polar aprotic solvent, a dissolved lithium salt.

52. The method according to claim 34, **characterized in that** the electrolyte of organic nature of the polymeric electrolyte type mainly consists of polyether including ethylene oxide units.

53. A method for preparing a half-cell **characterized in that** an aqueous solution of an at least partly glassy electrolyte of mineral nature or its precursor is prepared, wherein particles of electrode material and an electronic conduction additive are dispersed, the obtained dispersion is applied on a current collector and said dispersion is dried so as to wet and cover at least partly said particles and the current collector, and to form a porous mineral composite sub-lattice which is sufficiently adherent to the current collector in order to allow its handling as a film, a dispersion of a mineral powder is prepared in another aqueous solution of said at least partly glassy electrolyte of mineral nature or of its precursor and is applied on the porous mineral composite sub-lattice so as to form a porous half-cell including the collector, the mineral composite sub-lattice and a porous mineral separator, and an organic electrolyte of the polymer type containing a lithium salt is applied on the porous half-cell so as to totally or partly introduce the polymeric electrolyte, the latter then being used as a binder and conductor in the porous mineral composite/porous mineral separator sub-lattice, thereby forming a half-cell with dual solid electrolytes.

54. The method according to claim 53, **characterized in that** the mineral powder is selected from insulating oxides and solids conductive of lithium ions.

55. The method according to claim 54, **characterized in that** the mineral powder is selected from Nasicons.

56. The method according to claim 53, **characterized in that** the polymeric electrolyte is loaded with mineral powders either conductive of lithium ions or not.

57. The method according to claim 53, the **characterized in that** the polymeric electrolyte separator is applied by hot pressing, as a molten liquid phase, dissolved, or as a prepolymer.

58. The electrochemical cell according to claim 1, **characterized in that** the second electrode is a composite electrode.

59. The electrochemical cell according to claim one, **characterized in that** the composite electrode is a cathode based on vanadium oxide or on a transition metal phosphate of olivine structure, in which the collector is aluminium.

60. The electrochemical cell according to claim 1, **characterized in that** the second electrode is a lithium anode.

## Patentansprüche

1. Elektrochemische Zelle, umfassend eine Verbundelektrode, eine zweite Elektrode und mindestens einen Elektrolyten, der als Trenner dient, angebracht zwischen der Verbundelektrode und der zweiten Elektrode, wobei die Verbundelektrode einen Stromkollektor umfasst, Partikel elektrochemisch aktiver Materie, einen ersten elektronisch leitenden Zusatz und mindestens zwei feste Elektrolyten, einen ersten Elektrolyten mineralischer Art, mindestens teilweise glasartig, und einen zweiten Elektrolyten organischer Art des Typs Polymerelektrolyt, **dadurch gekennzeichnet, dass** der Elektrolyt mineralischer Art ein poröses mineralisches Unternetz bildet, in dem die Partikel aktiver Materie fein verteilt sind, wobei der Elektrolyt mineralischer Art so mindestens einen Teil der Oberfläche der aktiven Materie, fein verteilt im porösen mineralische Unternetz der Verbundelektrode, des ersten leidenden Zusatzes, der sich dort befindet, und des Stromkollektors benetzt, wobei die teilweise benetzten Oberflächen so vom porösen mineralischen Unternetz geschützt werden; wobei der zweite Elektrolyt organischer Art des Typs Polymerelektrolyt die Porositäten des porösen mineralischen Unternetzes auffüllt, um Ionenaustausche innerhalb des Verbundelektrolyten und mit den anderen Komponenten der Zelle sicherzustellen, wobei der zweite Elektrolyt organischer Art des Typs Polymerelektrolyt gegebenenfalls einen zweiten elektronisch leitenden Zusatz in fein verteilter Form umfasst, der es ermöglicht, die elektronischen Austausche innerhalb der Verbundelektrode zu optimieren, wobei das poröse mineralische Unternetz so Bereiche sicherstellt, in denen mindestens ein Teil der vom Elektrolyten mineralischer Art benetzten Oberflächen für die Komponenten des Elektrolyten organischer Art des Typs Polymerelektrolyt und für die Verunreinigungen, die von den anderen Komponenten der elektrochemischen Zelle stammen können, unzugänglich werden.

2. Elektrochemische Zelle nach Anspruch 1, **dadurch gekennzeichnet, dass** der erste elektronisch leitende Zusatz unter den Rußen, den Graphiten, den metallischem Pulvern, den gedopten konjugierten Polymeren, den Nitriden oder Carbiden von Übergangsmetallen gewählt wird.

3. Elektrochemische Zelle nach Anspruch 1, **dadurch gekennzeichnet, dass** der zweite elektronisch leitende Zusatz unter den Rußen und den Graphiten gewählt wird.

4. Elektrochemische Zelle nach Anspruch 1, **dadurch gekennzeichnet, dass** der Elektrolyt mindestens teilweise glasartiger mineralischer Art unter den Phosphaten oder Polyphosphaten und den Boraten oder Polyboraten eines Alkalimetalls und den Mischungen letzterer, Leitern von Alkali-lonen, gewählt wird.

5. Elektrochemische Zelle nach Anspruch 4, **dadurch gekennzeichnet, dass** das Alkalimetall hauptsächlich aus Lithium oder Kalium besteht.

6. Elektrochemische Zelle nach Anspruch 1, 2, 3, 4 oder 5, **dadurch gekennzeichnet, dass** der Elektrolyt mineralischer Art glasbildende Elemente umfasst.

7. Elektrochemische Zelle nach Anspruch 6, **dadurch gekennzeichnet, dass** die glasbildenden Elemente unter den Siliziumoxiden, den Siloxanen, den organisch-metallischen Aluminaten und Titanaten, ganz oder teilweise hydrolysiert, gewählt werden.

8. Elektrochemische Zelle nach Anspruch 1, **dadurch gekennzeichnet, dass** der Elektrolyt mineralischer Art aus Lithiumphosphat mit einer Stöchiometrie nahe LiP03 besteht, wobei der pH zwischen 4 und 9 liegt eine mininmale Leitfähigkeit von 10⁻¹⁰ S.cm⁻¹ bei der Betriebstemperatur der elektrochemischen Zelle aufweist.

9. Elektrochemische Zelle nach Anspruch 8, **dadurch gekennzeichnet, dass** das Lithiumphosphat durch schnelle Neutralisierung von Metaphosphorsäure in Lösung in Wasser durch ein Lithiumsalz präpariert wird, um den pH zwischen 4 und 9 zu erhalten.

10. Elektrochemische Zelle nach Anspruch 1, **dadurch gekennzeichnet, dass** sie eine Kathode ist, die die aktive Materie umfasst, die unter den Chalcogeniden und den Oxoanionderivaten von Übergangsmetallen und von Lithium und ihren Mischungen gewählt wird.

11. Elektrochemische Zelle nach Anspruch 10, **dadurch gekennzeichnet, dass** die aktive Materie auf Vanadiumoxyd basiert.

12. Elektrochemische Zelle nach Anspruch 10, **dadurch gekennzeichnet, dass** di aktive Materie auf Phosphaten oder Phosphosulfate oliviner Struktur von Übergangsmetallen basiert, umfassend Eisen oder Mangan oder Nasiconmaterialien.

13. Elektrochemische Zelle nach Anspruch 12, **dadurch gekennzeichnet, dass** das Phosphat ein Eisenphosphat des Typs LiFeP04 in entladenem Zustand ist.

14. Elektrochemische Zelle nach Anspruch 2, **dadurch gekennzeichnet, dass** der erste elektronisch leitende Zusatz des metallischen Typs in fein verteilter Form ist.

15. Elektrochemische Zelle nach Anspruch 14, **dadurch gekennzeichnet, dass** der elektronisch leitende Zusatz des metallischen Typs unter dem Silber und dem Kupfer gewählt wird.

16. Elektrochemische Zelle nach Anspruch 2, **dadurch gekennzeichnet, dass** der elektronisch leitende Zusatz des semi-metallischen Typs in fein verteilter Form ist.

17. Elektrochemische Zelle nach Anspruch 16, **dadurch gekennzeichnet, dass** der elektronisch leitende Zusatz des semi-metallischen Typs unter den Karbiden, den Nitriden und den Boriden von Metallen gewählt wird.

18. Elektrochemische Zelle nach Anspruch 1, **dadurch gekennzeichnet, dass** der Stromkollektor Aluminium umfasst.

19. Elektrochemische Zelle nach Anspruch 1, **dadurch gekennzeichnet, dass** der Stromkollektor Kupfer umfasst.

20. Elektrochemische Zelle nach Anspruch 1, **dadurch gekennzeichnet, dass** die aktive Materie der Verbundelektrode auf einem Potential von weniger als 1,6 Volt bezüglich demjenigen der Metalllithiums ist und als Anode dient.

21. Elektrochemische Zelle nach Anspruch 1, **dadurch gekennzeichnet, dass** die Volumenfraktion des mindestens teilweise glasartigen Elektrolyten mineralischer Art bezüglich der fein verteilten Phasen der aktiven Materie und des elektronisch leitenden Zusatzes zwischen ungefähr 2 und 25 % liegt, so dass sie eine mindestens teilweise Benetzung der fein verteilten festen Phasen erlaubt, die Erzeugung einer offenen Porosität des mineralseichen Unternetzes und die Adhäsion des mindestens teilweise glasartigen Elektrolyten mineralischer Art an den Kollektor vor der Einführung des Elektrolyten organischer Art des Typs Polymerelektrolyt.

22. Elektrochemische Zelle nach Anspruch 21, **dadurch gekennzeichnet, dass** die offene Porosität ungefähr 30 bis 70% beträgt.

23. Elektrochemische Zelle nach Anspruch 1, **dadurch gekennzeichnet, dass** der Elektrolyt organischer Art des Typs Polymerelektrolyt ein lösliches Salz umfasst, um ihn leitend zu machen.

24. Elektrochemische Zelle nach Anspruch 23, **dadurch gekennzeichnet, dass** das lösliche Salz ein Lithiumsalz ist.

25. Elektrochemische Zelle nach Anspruch 1, **dadurch gekennzeichnet, dass** der Elektrolyt organischer Art des Typs Polymerelektrolyt hauptsächlich aus einem Polyether besteht, umfassend Ethylenoxid-Motive.

26. Elektrochemische Zelle nach Anspruch 1, **dadurch gekennzeichnet, dass** der Elektrolyt organischer Art des Typs Polymerelektrolyt ein Gel umfasst, bestehend aus einer Polyethermatrix oder einem Polyelektrolyt, einem flüssigen aprotischen Lösemittel und einem löslichen Salz.

27. Elektrochemische Zelle nach Anspruch 1, **dadurch gekennzeichnet, dass** der Elektrolyt organischer Art des Typs Polymerelektrolyt ein Gel umfasst, bestehend aus einer nicht lösenden Polymermatrix, einem flüssigen aprotischen Lösemittel und einem löslichen Salz.

28. Elektrochemische Zelle nach Anspruch 1, umfassend eine Verbundelektrode, eine zweite Elektrode und mindestens einen Elektrolyten, der als Trenner dient, angebracht zwischen der Verbundelektrode und der zweiten Elektrode, **dadurch gekennzeichnet, dass** der Trenner aus deinem aus einem festen Polymerelektrolyt gebildet ist.

29. Elektrochemische Zelle nach Anspruch 1, **dadurch gekennzeichnet, dass** der Trenner, der zwischen der Verbundelektrode und der zweiten Elektrode angebracht ist, aus einem Polymer, einem aprotischen Lösemittel und einem abgespaltenen Lithiumsalz gebildet ist.

30. Elektrochemische Zelle nach Anspruch 29, **dadurch gekennzeichnet, dass** das Polymer, das im Trenner enthalten ist, ein Lösemittel ist.

31. Elektrochemische Zelle nach Anspruch 29, **dadurch gekennzeichnet, dass** das Polymer, das im Trenner enthalten ist, nicht lösend ist.

32. Elektrochemische Zelle nach Anspruch 1, **dadurch gekennzeichnet, dass** der Trenner, angebracht zwischen der Verbundelektrode und der zweiten Elektrode, aus einem festen Pulver besteht, das durch einen mindestens teilweise glasartigen Elektrolyten mineralischer Art verbunden ist, durchdrungen von einem flüssigen oder polymeren Elektrolyten.

33. Verfahren zur Präparation einer Verbundelektrode einer elektrochemischen Zelle, wobei die Verbundelektrode zwei lokale verteilte feste Elektrolyten umfasst, der erste mineralischer Art, mindestens teilweise glasartig, der zweite organischer Art des Typs Polymerelektrolyt, ebenso wie ihren Kollektor, **dadurch gekennzeichnet, dass** eine wässrige Lösung des ersten Elektrolyten oder seines Präkursors präpariert wird, in der Partikel des Elektrodenmaterials dispergiert werden, die erhaltene Dispersion auf einem Stromkollektor angebracht wird und die Dispersion getrocknet wird, um mindestens teilweise die Partikel und den Stromkollektor zu benetzen und zu bedecken, und um ein poröses mineralisches Unternetz zu bilden, das ausreichend am Stromkollektor haftet, um seine Handhabung in Form eines Films zu erlauben, und dann gegebenenfalls eine Dispersion eines zweiten elektronisch leitenden Zusatzes in einem Elektrolyten organischer Art des Typs Polyelektrolyt angewendet wird, umfassend ein Lithiumsalz auf dem Film des porösen mineralischen Unternetzes, um ganz oder teilweise innerhalb des porösen mineralischen Unternetzes den Elektrolyten organischer Art des Typs Polymer einzuführen, damit er als verformbarer Binder und als gemischter Leiter im Inneren des porösen Unternetzes dient, und um die Verbundelektrode zu erhalten.

34. Verfahren nach Anspruch 33, **dadurch gekennzeichnet, dass** die Partikel des Elektrodenmaterials einen ersten elektrisch leitenden Zusatz in der wässrigen Lösung des ersten Elektrolyten umfassen.

35. Verfahren nach Anspruch 33, **dadurch gekennzeichnet, dass** der Elektrolyt organischer Art des Typs Polymerelektrolyt in das poröse mineralische Unternetz durch Schmelzen eingeführt wird.

36. Verfahren nach Anspruch 33, **dadurch gekennzeichnet, dass** der Elektrolyt organischer Art des Typs Polymerelektrolyt in das poröse mineralische Unternetz in Form einer Lösung in einem Lösemittel eingeführt wird.

37. Verfahren nach Anspruch 33, **dadurch gekennzeichnet, dass** der Elektrolyt organischer Art des Typs Polymerelektrolyt in das poröse mineralische Unternetz in Form eines Präpolymers oder Monomers mit niedriger Masse eingeführt wird, das nach der Formung vernetzt oder polymerisiert wird.

38. Verfahren nach Anspruch 33, **dadurch gekennzeichnet, dass** der erste leitende Zusatz unter den Rußen, den Graphiten, den metallischem Pulvern oder den semi-metallischen Zusammensetzungen basierend auf Carbiden, Nitriden, Boriden oder Siliziden von Metallen enthalten sind.

39. Verfahren nach Anspruch 33, **dadurch gekennzeichnet, dass** der zweite leitende Zusatz unter den Rußen und den Graphiten enthalten ist.

40. Verfahren nach Anspruch 33, **dadurch gekennzeichnet, dass** die Partikel des Elektrodenmaterials unter den Oxiden, den Chalcogeniden, den Phosphaten oliviner Struktur, den Nasiconmaterialien, umfassend Phosphat- oder Sulfatanionen, gewählt werden.

41. Verfahren nach Anspruch 34, **dadurch gekennzeichnet, dass** eine dielektrische Volumenfraktion mineralischer Art verwendet wird, die zwischen 2 und 25% bezüglich des Volumens des Elektrodenmaterials und des elektronisch leitenden Zusatzes liegt, und dass das poröse mineralische Unternetz so geformt wird, dass seine Porostität zwischen ungefähr 30 und 70 % liegt.

42. Verfahren nach Anspruch 34, **dadurch gekennzeichnet, dass** der Elektrolyt mineralischer Art mindestens teilweise glasartig ist und gegenüber den Bestandteilen des Elektrolyten organischer Art des Typs Polymerelektrolyt undurchlässig ist und unter den Phosphaten und Polyphosphaten, den Boraten, den Polyboraten eines Alkalimetalls und den Mischungen Letzterer gewählt wird.

43. Verfahren nach Anspruch 42, **dadurch gekennzeichnet, dass** das Alkalimetall hauptsächlich aus Lithium oder Kalium besteht.

44. Verfahren nach Anspruch 34, **dadurch gekennzeichnet, dass** der Elektrolyt mineralischer Art glasbildende Elemente umfasst.

45. Verfahren nach Anspruch 44, **dadurch gekennzeichnet, dass** die glasbildenden Elemente unter den Siliziumoxiden, den Siloxanen, den organisch-metallischen Aluminaten und Titanaten, ganz oder teilweise hydrolysiert, gewählt werden.

46. Verfahren nach Anspruch 34, **dadurch gekennzeichnet, dass** der Elektrolyt mineralischer Art aus Lithiumphosphat mit einer Stöchiometrie nahe LiP03 aufweist

47. Verfahren nach Anspruch 34, **dadurch gekennzeichnet, dass** der Elektrolyt organischer Art ein lösendes Polymer ist.

48. Verfahren nach Anspruch 34, **dadurch gekennzeichnet, dass** der Elektrolyt organischer Art ein nicht lösendes Polymer ist.

49. Verfahren nach Anspruch 34, **dadurch gekennzeichnet, dass** der Elektrolyt organischer Art ein geliertes Polymer ist.

50. Verfahren nach Anspruch 34, **dadurch gekennzeichnet, dass** der Elektrolyt organischer Art ein nicht geliertes Polymer ist.

51. Verfahren nach Anspruch 47, 48, 49 oder 50, **dadurch gekennzeichnet, dass** der Elektrolyt organischer Art ein polares aprotisches Lösemittel, ein gelöstes Lithiumsalz, umfasst.

52. Verfahren nach Anspruch 34, **dadurch gekennzeichnet, dass** der Elektrolyt organischer Art des Typs Polymerelektrolyt hauptsächlich aus einem Polyether besteht, umfassend Ethylenoxid-Motive.

53. Verfahren zur Präparation einer Halbzelle, **dadurch gekennzeichnet, dass** eine wässrige Lösung eines Elektrolyten mineralischer Art, mindestens teilweise glasartig, oder seines Präkursors präpariert wird, in der Partikel des Elektrodenmaterials und ein elektronisch leitender Zusatz dispergiert werden, die erhaltene Dispersion auf einem Stromkollektor angebracht wird und die Dispersion getrocknet wird, um mindestens teilweise die Partikel und den Stromkollektor zu benetzen und zu bedecken, und ein poröses mineralisches Verbundunternetz zu bilden, das ausreichend am Stromkollektor haftet, um seine Handhabung in Form eines Films zu erlauben, eine Dispersion eines mindestens teilweise glasartigen mineralischen Pulvers in einer anderen wässrigen Lösung des Elektrolyten mineralischer Art oder seines Präkursors präpariert wird und es auf das poröse mineralische Verbundunternetz angewendet wird, um eine poröse Halbzelle zu bilden, die den Kollektor umfasst, das mineralische Verbundunternetz und einen porösen mineralischen Trenner, und ein organischer Elektrolyt des Typs Polymer, umfassend ein Lithiumsalz auf die poröse Halbzelle angewendet wird, um ganz oder teilweise den Polymerelektrolyt einzuführen, wobei Letzterer dann als Binder und Leiter im porösen Verbundunternetz - porösen mineralischen Trenner dient und so eine Halbzelle mit doppelten festen Elektrolyte bildet.

54. Verfahren nach Anspruch 53, **dadurch gekennzeichnet, dass** das mineralische Pulver unter den isolierenden Oxiden und den festen Leitern der Lithiumionen gewählt wird.

55. Verfahren nach Anspruch 54, **dadurch gekennzeichnet, dass** das mineralische Pulver unter den Nasiconmaterialien, gewählt wird.

56. Verfahren nach Anspruch 53, **dadurch gekennzeichnet, dass** der Polymerelektrolyt mit leitenden oder nicht leitenden mineralischen Pulvern der Lithiumionen geladen ist.

57. Verfahren nach Anspruch 53, **dadurch gekennzeichnet, dass** der Polymerelektrolyttrenner durch Heißpressen in Form der geschmolzenen flüssigen Phase, gelöst oder in Form eines Präpolymers angewendet wird.

58. Elektrochemische Zelle nach Anspruch 1, **dadurch gekennzeichnet, dass** die zweite Elektrode eine Verbundelektrode ist.

59. Elektrochemische Zelle nach Anspruch 1, **dadurch gekennzeichnet, dass** die Verbundelektrode eine Kathode basierend auf Vanadiumoxid oder Übergangsmetallphosphat mit oliviner Struktur ist, in der der Kollektor aus Aluminium ist.

60. Elektrochemische Zelle nach Anspruch 1, **dadurch gekennzeichnet, dass** die zweite Elektrode eine Lithiumanode ist.
